# EUROPÄISCHE PATENTSCHRIFT

(11) **EP 1 963 757 B1**
(45) Veröffentlichungstag und Bekanntmachung des Hinweises auf die Patenterteilung: **10.08.2016**
(21) Anmeldenummer: 06829611.0
(22) Anmeldetag: 14.12.2006
(51) Int. Cl.: F25B 17/08, F25B 35/04, F28F 27/02

(54) **WÄRMEPUMPE**
HEAT PUMP
POMPE A CHALEUR

(30) Priorität: 14.12.2005 DE 102005060183
(43) Veröffentlichungstag der Anmeldung: 03.09.2008
(73) Patentinhaber: MAHLE Behr GmbH & Co. KG, 70469 Stuttgart (DE)
(72) Erfinder: BURK, Roland, 70469 Stuttgart (DE); HESS, Michael, 69434 Hirschhorn (DE)
(74) Vertreter: Grauel, Andreas
(86) Internationale Anmeldenummer: PCT/EP2006/012058
(87) Internationale Veröffentlichungsnummer: WO 2007/068481

(56) Entgegenhaltungen:
- DE-A1- 10 038 637
- DE-A1- 19 818 807
- JP-A- 11 118 286
- JP-A- 11 294 888

## Beschreibung

Die vorliegende Erfindung betrifft eine Wärmepumpe nach dem Oberbegriff des Anspruchs 1.

DE 198 18 807 A1 beschreibt eine Wärmepumpe zur Klimatisierung von Fahrzeuginnenräumen, die nach dem Adsorber-Desorber-Prinzip funktioniert. Bei dieser Fahrzeug-Klimaanlage sind eine Anzahl von strukturierten Blechen stapelartig aufeinandergelegt, so dass sie geschlossene Hohlräume und Durchtrittsräume ausbilden, wobei in den Hohlräumen jeweils ein Adsorber-Desorber-Bereich und ein Kondensations-Verdampfungsbereich augebildet ist. Eine Luftströmung zum Erhitzen und/oder Abkühlen des Adsorberbereiches und eine Luftströmung zur Erzeugung gekühlter Luft durch Umströmung des Verdampferbereichs wird jeweils durch ein Paar von Verteilzylindern für die Durchtrittsbereiche gesteuert, wobei die Verteilzylinder drehbare Verteilereinsätze aufweisen. Eine solche Fahrzeug-Klimaanlage ist in der beschriebenen Ausführung in ihrem Wirkungsgrad noch nicht wettbewerbsfähig. Zudem ist die erzielbare Kühlleistung bei gegebener Baugröße der Vorrichtung beschränkt.

Es ist die Aufgabe der Erfindung, eine eingangs genannte Wärmepumpe in ihrer Leistungsfähigkeit und ihrem Antriebswärmebedarf bei gegebenem Bauraum zu verbessern.

Diese Aufgabe wird für eine eingangs genannte Wärmepumpe erfindungsgemäß mit den kennzeichnenden Merkmalen des Anspruchs 1 gelöst.

Durch die Ausbildung von jeweils zumindest vier separaten wendelförmigen Kammern in jeder der Verteilvorrichtungen für zumindest das erste Fluid wird ein erheblich verbesserter Wärmeaustausch zwischen dem ersten Fluid und den ersten Zonen der Hohlelemente ermöglicht.

Unter einem Fluid im Sinne der Erfindung wird grundsätzlich jede fließfähiger Substanz verstanden, insbesondere ein Gas, eine Flüssigkeit, ein Gemisch aus gasförmiger und flüssiger Phase oder ein Gemisch aus flüssiger und fester Phase (z.B. flow-ice). Unter dem Zusammenwirken des Arbeitsmittels; mit der ersten und der zweiten Zone wird jede Art einer thermodynamisch relevanten exothermen oder endothermen Umsetzung des Arbeitsmittels mit oder in der Zone verstanden, bei der insbesondere ein Wärmeaustausch zwischen der jeweiligen Zone und dem die Zone umströmenden Fluid stattfindet. Als konkretes Beispiel sei genannt, dass die erste Zone ein Adsorber-Desorber-Material enthalten kann, z. B. Zeolith, wobei das Arbeitsmittel Wasser sein kann, welches insbesondere in der zweiten Zone in Kapillar-Strukturen kondensierbar oder verdampfbar ist. Alternativ können in den Zonen zum Beispiel auch unterschiedliche Metalle vorliegen, wobei das Arbeitsmittel z. B. Wasserstoff ist, so dass unter Wärmeaufnahme und/oder Wärmeabgabe eine Bildung oder Auflösung von Metallhydriden in den Zonen stattfindet. Das Zusammenwirken des Arbeitsmittels mit den Zonen kann sowohl eine Physisorption als auch eine Chemisorption oder eine andere Art des Zusammenwirkens umfassen. Unter einem Hohlelement im Sinne der Erfindung ist jedes Element zu verstehen, innerhalb dessen ein Transport des Arbeitsmittels möglich ist.

Ein Beispiel für den Einsatz einer erfindungsgemäßen Wärmepumpe ist die Gebäudetechnik. Dort kann die mit einem Brenner erzeugte Heizleistung dazu benutzt werden, zusätzlich Umweltwärme auf ein für Heizzwecke nutzbares Temperaturniveau zu heben. Weiterhin kann die Wärmepumpe z.B. in Verbindung mit einem Blockheizkraftwerk eingesetzt werden, um den Gesamtwirkungsgrad zu erhöhen. Im Winter kann die Wärmepumpe z.B. zur effektiveren Nutzung des Abgaswärmestroms zu Heizungszwecken eingesetzt werden, indem zusätzliche Wärme vom Außentemperaturniveau auf ein für die Heizung nutzbares Niveau gepumpt wird. Im Sommer kann die gleiche, eventuell leicht modifizierte oder auch nur anders eingestellte Anlage zur Kühlung des Gebäudes verwendet werden, indem ebenfalls der Abgaswärmestrom des Stromerzeugers zum Antrieb der Kühlung genutzt wird. Es kann sich aber auch um eine Nutzung von thermischer Solarenergie zur Kälteerzeugung mittels der Wärmepumpe handeln. Ebenso kann die erfindungsgemäße Wärmepumpe grundsätzlich auch wie in der DE 198 18 807 A1 beschrieben zur Klimatisierung von insbesondere Nutzfahrzeugen eingesetzt werden. Andere denkbare Anwendungen sind die Nutzung von Fernwärme im Sommer zur Kälteerzeugung bzw. Klimatisierung oder die Abwärmenutzung von Industrie-Feuerungsanlagen zur Erzeugung von Klimatisierungs- oder Prozesskälte. Allgemein zeichnet sich eine erfindungsgemäße Wärmepumpe durch hochgradige Wartungsfreiheit und Zuverlässigkeit aus. Es besteht eine hohe Flexibilität bei der Auswahl des ersten und zweiten Fluids, die nicht gleich sein müssen und sich zum Beispiel für einen Sommereinsatz und einen Wintereinsatz unterscheiden können.

In einer bevorzugten Ausführung der Wärmepumpe ist diese eine Adsorptions-Wärmepumpe, wobei das Arbeitsmittel in der ersten Zone adsorbierbar und desorbierbar ist und in der zweiten Zone verdampfbar und kondensierbar ist. In einer alternativen bevorzugten Ausführung ist das Arbeitsmittel zumindest in der ersten Zone reversibel chemisorbierbar. Es kann sich bei der Wärmepumpe auch um ein gemischtes Prinzip handeln, etwa in dem Sinne, dass einige Hohlelemente nach dem Adsorber-Prinzip (Physisorption) arbeiten und andere Hohlelemente eine Chemisorption aufweisen.

In bevorzugter Weiterbildung einer erfindungsgemäßen Wärmepumpe weisen die Strömungswege eine erste Gruppe von zumindest zwei benachbarten Strömungswegen und eine zweite Gruppe von zumindest zwei beachbarten Strömungswegen auf, wobei die Strömungswege der ersten Gruppe sämtlich in einer ersten Richtung und die Strömungswege der zweiten Gruppe sämtlich in hierzu entgegengesetzter Richtung durchströmt werden. Hierdurch ist es ermöglicht, die einzelnen Strömungswege einer Gruppe unterschiedlichen Temperaturen des Fluids zuzuordnen, so dass ein Wärmeaustausch mit den Hohlelementen bei gegebener Baugröße bzw. Kontaktfläche von Fluid und Hohlelement durch Anpassung an das dort vorliegende Temperaturprofil verbessert ist. Eine Verbesserung wird dabei sowohl durch die Gleichrichtung der Fluidströmung innerhalb einer Gruppe als auch durch die Entgegenrichtung der beiden Gruppen zueinander erzielt, wodurch der Umkehrung des Temperaturgangs bei Wärmeabgabe gegenüber Wärmeaufnahme Rechnung getragen wird.

In bevorzugter Ausgestaltung umfasst ein Plattenelement eine Anzahl von parallelen stirnseitig geschlossenen Flachrohren, wobei jedes der Flachrohre ein Hohlelement mit erster und zweiter Zone ausbildet. Dies ermöglicht eine kostengünstige Herstellung einer Wärmepumpe, wobei die Form der Flachrohre einem Wärmeaustausch bei gegebener Baugröße zugute kommt. Insbesondere vorteilhaft sind die Flachrohre hermetisch voneinander getrennt. Hierdurch wird es in besonderem Maße ermöglicht, dass unterschiedliche Hohlelemente oder Flachrohre des gleichen Plattenelements unterschiedliche Temperaturen und Drücke aufweisen, was bei geeigneter Stufung der Temperaturen in Verbindung mit geeigneter Flussrichtung des Fluids entlang der Plattenelemente zu einem wiederum verbesserten Wärmeaustausch bei gegebener Bauraumgröße führt.

Weiterhin ist zwischen zwei der Plattenelemente eine Hohlplatte angeordnet, deren Hohlraum einem der Durchtrittsbereiche zugeordnet ist, wobei die Hohlplatte in flächiger thermischer Verbindung, insbesondere Verlötung, mit den benachbarten Plattenelementen steht. Hierdurch ist ein modulartiger Aufbau eines Stapels aus Plattenelementen und Durchtrittsräumen auf einfache und kostengünstige Weise ermöglicht, wobei die Anzahl speziell gefertigter aufwendiger Bauteile gering gehalten wird. Erfindungsgemäß ist dabei zwischen zwei Plattenelementen eine Hohlplatte erster Art angeordnet, welche einen Durchtrittsbereich erster Art ausbildet und eine von der Hohlplatte erster Art im Wesentlichen thermisch getrennte Hohlplatte zweiter Art, welche einen Durchtrittsbereich zweiter Art ausbildet. Auf diese Weise wird unter weiterer Verwendung standardisierter Bauteile zugleich die Ausbildung einer thermischen Trennung zwischen den beiden Arten von Durchtrittsbereichen erreicht. Die Hohlplatten erster und zweiter Art müssen nicht notwendig die gleiche Dicke aufweisen, was durch entsprechende Ausmung der Plattenelemente bzw. Hohlelemente kompensiert werden kann; so kann z.B. die Hohlplatte erster Art für ein flüssiges Fluid und die Hohlplatte zweiter Art für ein gasförmiges Fluid angepaßt dimensioniert sein.

Weiterhin bevorzugt sind zumindest zwei jeweils endseitig der Plattenelemente angeordnete und einer Verteilung des zweiten Fluids durch die Durchtrittsbereiche zweiter Art zugeordnete Verteilvorrichtungen mit jeweils einem feststehenden Hohlzylinder und einem in dem Hohlzylinder drehbaren Verteillereinsatz vorgesehen. Hierdurch wird eine hinsichtlich des Wärmeaustausches optimierte Verteilung des zweiten Fluids auf die Durchtrittsbereiche auf einfache Weise ermöglicht. Besonders bevorzugt weist dabei der Verteilereinsatz der Verteilvorrichtungen für das zweite Fluid Trennwände auf, die in zumindest einem der Zylinder zumindest drei separate wendelförmige Kammern abtrennen, wobei durch jede der Kammern ein zumindest einen Durchtrittsbereich zweiter Art umfassender Strömungsweg definiert ist. Hierdurch ist auch für den Wärmeaustausch des zweiten Fluids mit den zweiten Zonen eine Optimierung bei gegebenem Bauraum ermöglicht.

In bevorzugter Ausführung weisen die insbesondere, aber nicht notwendig spiralig ausgeformten Trennwände Fahnen auf, mittels derer ein zeitweiser Verschluss zumindest eines Strömungsweges bewirkbar ist. Durch einen solchen zeitweisen Verschluss eines Strömungsweges hinsichtlich des Fluidaustausches kann je nach Ausbildung der Wärmepumpe die Effektivität eines Wärmeaustausches bei gegebener Baugröße weiterhin verbessert werden, indem Bypass-Strömungen verhindert werden.

In einer bevorzugten Ausbildung einer Wärmepumpe weist der Verteilereinsatz einen Anschlussbereich mit radialen Durchbrechungen auf, wobei über die jeweils mit einer Kammer fluchtende Durchbrechung ein Fluidaustausch der Kammer erfolgt. Hierdurch ist ein einfacher Anschluss der wendelförmigen Kammer mit einer äußeren Fluidführung auch dann ermöglicht, wenn eine große Anzahl von separaten Kammern vorliegt. In besonders einfacher Ausbildung erfolgt dabei der Fluidaustausch mehrerer der wendelförmigen Kammern über eine entsprechende Anzahl der Durchbrechungen mit einem mehrteiligen Anschlussraum, der den Zylinder zumindest teilweise umfängt.

Weiterhin bevorzugt ist ein Anschlussraum des ersten Zylinders mit einem Anschlussraum des zweiten Zylinders über eine Anzahl voneinander separierter Kanäle verbunden. Somit ist insgesamt eine besonders aufwendige Führung einer großen Anzahl von Strömungswegen mit einfachen und kostengünstigen Mitteln ermöglicht.

Weiterhin bevorzugt kann es vorgesehen sein, dass jeder der Verteilereinsätze zu den anderen Verteilereinsätzen synchronisiert antreibbar drehbar ist. Eine phasengerechte Synchronisierung der Drehbewegung der Verteilereinsätze ist allgemein für eine wirkungsvolle Funktion der Wärmepumpe erforderlich. Vorteilhafterweise sind die beiden Verteilereinsätze des ersten und die beiden Verteileinsätze des zweiten Fluids in ihrer Phasenlage jeweils so positioniert, dass sich die mit den Kammern kommunizierenden Strömungsbereiche decken. In bevorzugter Ausführung kann dabei eine Verteilvorrichtung des zweiten Fluids gegenüber einer Verteilvorrichtung des ersten Fluids bezüglich einer Phasenlage eines Verteilzyklus einstellbar veränderbar sein. Dies kann insbesondere über eine Phasenlage der Verteilereinsätze geschehen. Durch die Einstellbarkeit der Phasenlage ist eine weitere Optimierung der Wärmepumpenleistung ermöglicht. Allgemein kann eine Optimierung der Phasenlage in Abhängigkeit der mittleren Temperaturen der Fluide, der Art der Wirkungsweise der Hohlelemente und der Art des Arbeitsmittels, der Art der Fluide und weiterer Parameter der Wärmepumpe die Wirkungsweise verbessern.

In einer weiteren vorteilhaften Ausbildung ist eine Steigung einer gewendelten Kammer nicht konstant über die Länge des Zylinders. Hierdurch wird erreicht, dass über einen Zyklus bzw. eine Umdrehung des Verteileinsatzes eine veränderliche Anzahl von Durchtrittsbereichen mit der jeweiligen Kammer verbunden wird bzw. der durch die Kammer definierte Strömungsweg eine veränderliche Breite hat, was im Einzelfall zu einer Optimierung der Wärmepumpenleistung bei gegebenem Bauraum führen kann.

Allgemein können mehrere hermetisch voneinander getrennte Hohlelemente vorgesehen sein, wobei wenigstens zwei der Hohlelemente unterschiedliche Arbeitsmittel und/oder Sorptionsmittel aufweisen. Grundsätzlich ist eine erfindungsgemäße Wärmepumpe nicht auf einheitliche Stoffsysteme in jedem der Hohlelemente beschränkt.

Zur allgemeinen Verbesserung der thermischen Austauschleistungen ist es bevorzugt vorgesehen, dass die Strömungswege des ersten Fluids im Vergleich zu den über identische Hohlelemente zugeordneten Strömungswege des zweiten Fluids in entgegengesetzter Richtung durchströmt werden.

In einer ersten zweckmäßigen Bauweise ist es vorgesehen, dass die Trennwände des Verteilereinsatzes spiralig ausgeformt sind, und dass die abgetrennten Kammern wendelförmig sind.

In einer alternativen zweckmäßigen Ausführungsform verlaufen die Trennwände des Verteilereinsatzes im Wesentlichen gerade über die Länge des Verteilereinsatzes. Auf diese Weise sind die Verteilereinsätze einfach und kostengünstig herstellbar, insbesondere als zumindest abschnittsweise im Wesentlichen prismatische Körper. Diese können zum Beispiel als gegebenenfalls nachbearbeitete Strangpressprofile hergestellt werden. Zur einfachen Bereitstellung der mehreren Strömungswege weist der Hohlzylinder dabei eine Mehrzahl von Durchbrechungen auf, wobei in axialer Richtung aufeinander folgende Durchbrechungen jeweils um einen Winkel versetzt zueinander angeordnet sind. Hierdurch ist in konstruktiv einfacher Weise eine zyklische Folge von Strömungswegen realisiert, die durch Drehen des geraden Verteilereinsatzes in Stapelrichtung der Hohlelemente wandern.

Bei einer besonders geeigneten konstruktiven Detaillösung weist der den Verteilereinsatz umfangende Hohlzylinder dabei eine innere und eine äußere Wandung auf, wobei zwischen den beiden Wandungen mehrere axial nacheinander angeordnete Ringkammern ausgebildet sind. Hierdurch ist insbesondere ein einfacher Anschluss der Hohlzylinder an den Stapel aus Plattenelementen bzw. Hohlelementen ermöglicht. Besonders bevorzugt sind dabei die Ringkammern als in axialer Richtung stapelbare Ringkammermodule ausgebildet. Hierdurch lässt sich durch Verwendung von Gleichteilen eine kostengünstig angepasste Herstellung von Hohlzylindern bzw. Verteilvorrichtungen unterschiedlicher Länge bzw. Wärmepumpen unterschiedlicher Größe erzielen.

Bei einer weiteren vorteilhaften Ausführungsform der Wärmepumpe ist zur Optimierung der Leistungsfähigkeit bei gegebenem Bauraum eine Verteileinrichtung für das zweite Fluid vorgesehen, wobei das zweite Fluid mittels der Verteilvorrichtung über mehrere Strömungswege durch die Durchtrittsbereiche zweiter Art geleitet wird. Besonders bevorzugt bildet dabei einer der Strömungswege eine geschlossene und von den übrigen Strömungswegen des zweiten Fluids separierte Schleife aus Der geschlossene Strömungsweg hat dabei vorteilhaft eine kleinere Breite in der Stapelrichtung als ein benachbarter Strömungsweg, wobei der geschlossene Strömungsweg insbesondere zur Zwischentemperaturverdampfung und/oder Zwischentemperaturkondensation geführt ist. Durch eine solche Führung des geschlossenen Strömungswegs wird eine innere thermische Kopplung einer Verdampfungs- und einer Kondensationszone der Wärmepumpe ausgebildet, wodurch insbesondere noch Wärmequellen mit tiefer liegenden Temperaturbereich genutzt werden können. In zweckmäßiger Detailgestaltung umfasst dabei der geschlossene Strömungsweg ein Pumpenglied zur Förderung des Fluids.

Diese Ausführungsform nutzt die Möglichkeit, nur mittels der Fluidsteuerung eine Art Kaskadenschaltung zu realisieren, entweder um die erforderliche Desorptionstemperatur abzusenken und/oder den Temperaturabstand zwischen minimaler Adsorptionstemperatur und Verdampfungstemperatur (Temperaturhub) zu vergrößern. Dies wird dadurch erreicht, dass in den Fluidverteilzylindern zur Fluidsteuerung der Phasenwechselzone zwischen den Verteilkammern für die Kondensation und für die Verdampfung Zwischenkammern vorgesehen werden, durch die ein zusätzlicher kleiner Kreislauf zirkuliert. Dadurch wird bewirkt, dass ein Wärmeübertrag von der Kondensations-Endphase auf die Verdampfungs-Endphase erfolgt, indem kaltes Fluid zur Kondensatorkühlung verwendet wird. Dies bewirkt eine Druckabsenkung am Ende der Desorptions-/Kondensationsphase wodurch eine Absenkung der zur vollständigen Desorption benötigten Temperatur bewirkt wird. Die damit verbundene Druckanhebung am Ende der Adsorptions-/Verdampfungsphase bewirkt eine Anhebung der benötigten Adsorptionstemperatur. Diese Effekte können auch zur Erhöhung der effektiv genutzten Beladungsbreite des eingesetzten Adsorptions- bzw. Reaktionsmittels dienen.

Weitere Vorteile und Merkmale der Erfindung ergeben sich aus den nachfolgend beschriebenen Ausführungsbeispielen sowie aus den abhängigen Ansprüchen.

Nachfolgend wird ein bevorzugtes Ausführungsbeispiel einer Wärmepumpe mit mehreren Abwandlungen beschrieben und anhand der anliegenden Zeichnungen näher erläutert.
- Fig. 1: zeigt eine schematische räumliche Ansicht einer ersten Ausführungsform einer erfindungsgemäßen Wärmepumpe.
- Fig. 2: zeigt eine schematische Schnittansicht durch die Wärmepumpe aus Fig. 1 wobei die Schnittebene in einem Plattenelement verläuft.

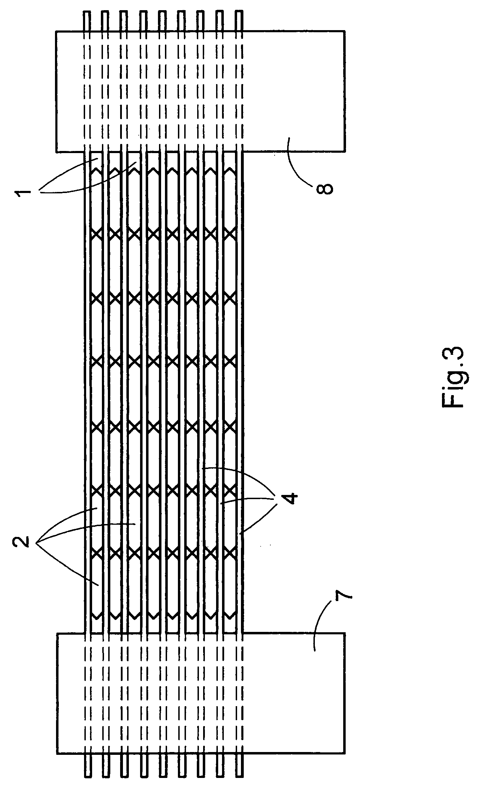

- Fig. 3: zeigt eine schematische Schnittansicht der Wärmepumpe aus Fig. 2, wobei die Schnittebene entlang der Linie A' A verläuft.
- Fig. 4: zeigt eine schematische räumliche Darstellung eines Teils einer zylindrischen Verteilvorrichtung der Wärmepumpe aus Fig. 1 mit herausgezogenem Einsatz.
- Fig. 5: zeigt eine schematische räumliche Darstellung eines Ausschnitts des Verteilzylinders aus Fig. 4.
- Fig. 6: zeigt eine räumliche Darstellung des Endabschnitts des Zylinders aus Fig. 4.

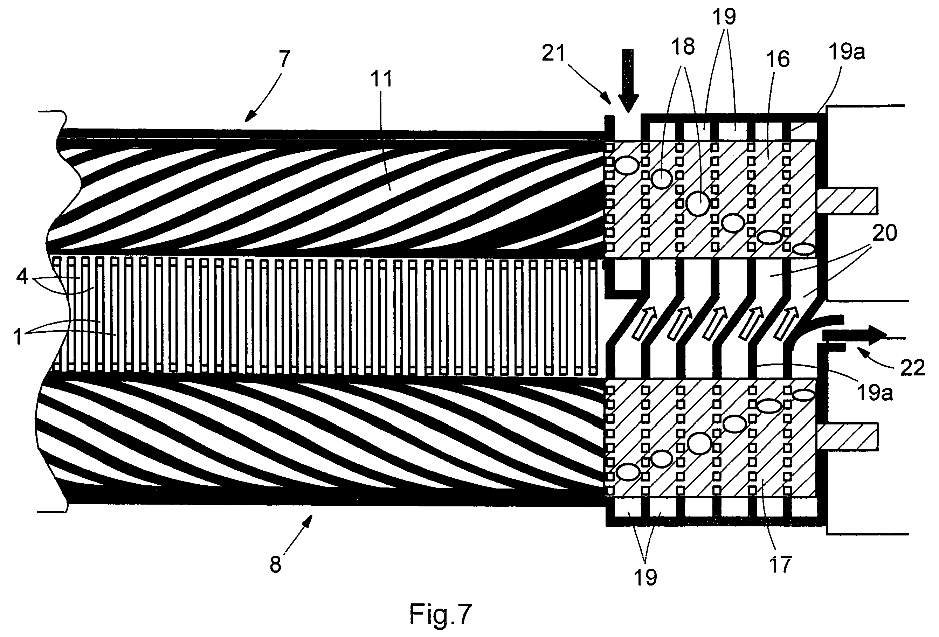

- Fig. 7: zeigt eine schematisierte Schnittansicht durch eine Wärmepumpe nach Fig. 1 zur Verdeutlichung des Verlaufs von Strömungswegen.
- Fig. 8: zeigt eine schematisierte Darstellung der Wärmepumpe aus Fig. 7, wobei Strömungswege unterschiedlicher Temperatur in unterschiedlichen Graustufen dargestellt sind.
- Fig. 9: zeigt ein Diagramm eines zeitlichen Temperaturverlaufs an einer Adsorberseite der Wärmepumpe.

Vorteilhaft ist, dass ein Anschlussraum des ersten Zylinders mit einem Anschlussraum des zweiten Zylinders über eine Anzahl voneinander separierter Kanäle verbunden ist.

Vorteilhaft ist, dass jeder der Verteilereinsätze zu den anderen Verteilereinsätzen synchronisiert antreibbar drehbar ist.

Vorteilhaft ist, dass eine Verteilvorrichtung des zweiten Fluids gegenüber einer Verteilvorrichtung des ersten Fluids bezüglich einer Phasenlage eines Verteilzyklus einstellbar veränderbar ist.

Vorteilhaft ist, dass eine Steigung zumindest einer gewendelten Kammer nicht konstant über die Länge des Zylinders ist.

Vorteilhaft ist, dass mehrere hermetisch voneinander getrennte Hohlelemente vorgesehen sind, wobei wenigstens zwei der Hohlelemente unterschiedliche Arbeitsmittel aufweisen.

Vorteilhaft ist, dass zumindest in einer Mehrzahl der Fälle die Strömungswege des ersten Fluids zu benachbarten Strömungswegen des zweiten Fluids entgegengesetzt gerichtet sind.

Vorteilhaft ist, dass die Trennwände des Verteilereinsatzes spiralig ausgeformt sind, und dass die abgetrennten Kammern wendelförmig sind. Vorteilhaft ist, dass der geschlossene Strömungsweg ein Pumpenglied zur Förderung des Fluids umfasst.

Vorteilhaft ist, dass einer der Strömungswege eine geschlossene und von den übrigen Strömungswegen des zweiten Fluids separierte Schleife ausbildet.

Vorteilhaft ist, dass der geschlossene Strömungsweg eine kleinere Breite in der Stapelrichtung aufweist als ein benachbarter Strömungsweg, wobei der geschlossene Strömungsweg insbesondere zur Zwischentemperaturverdampfung und/oder Zwischentemperaturkondensation geführt ist. der Wärmepumpe, wobei ein zusätzlicher geschlossener Strömungsweg des zweiten Fluids vorliegt.

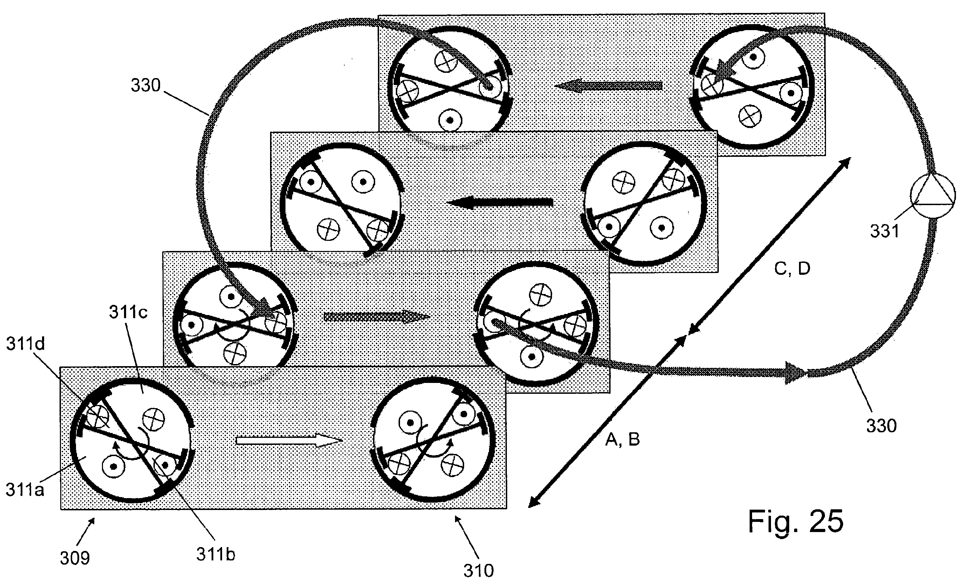

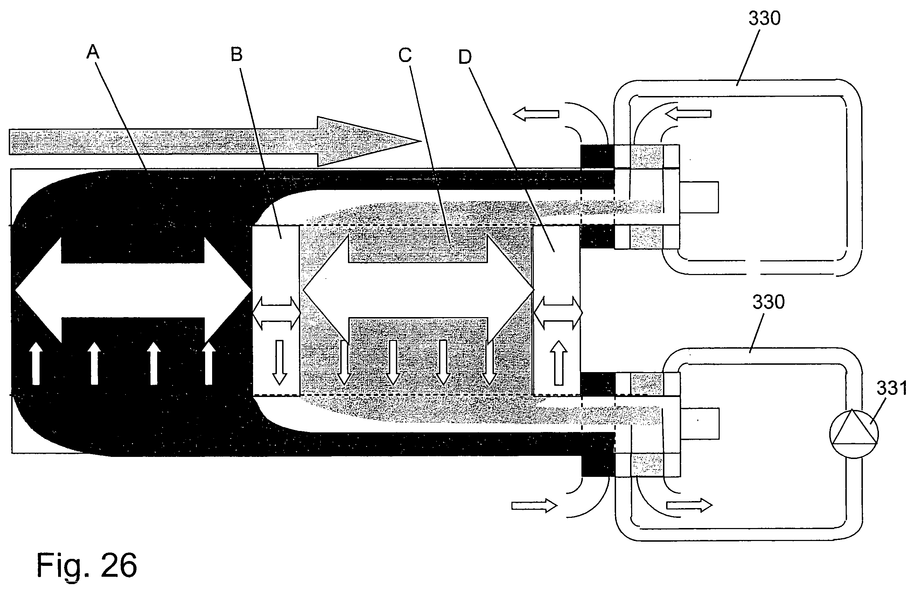

Fig. 26 zeigt eine schematische Darstellung der Strömungswege des zweiten Fluids einer Wärmepumpe nach Fig. 25.

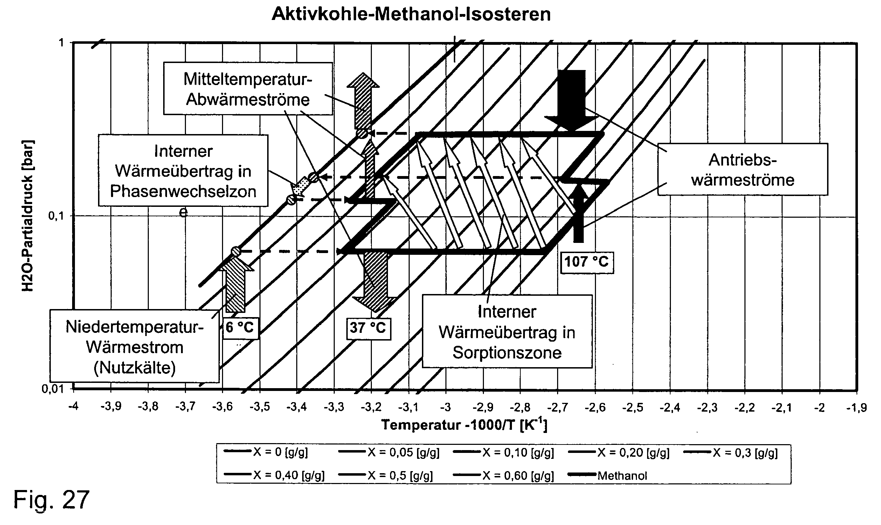

Fig. 27 zeigt ein idealisiertes Prozessdiagramm einer Wärmepumpe aus Fig. 25 und Fig. 26.

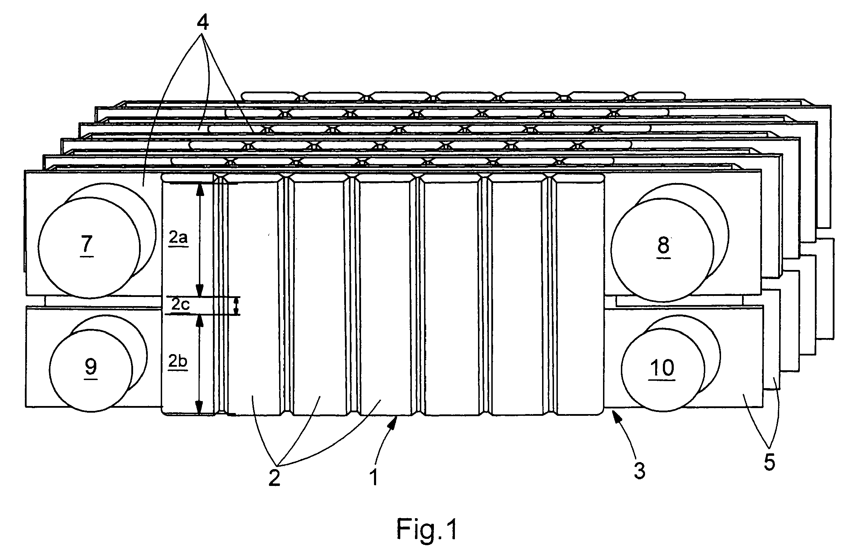

Die Wärmepumpe aus Fig. 1 ist stapelartig aus alternierenden Lagen aufgebaut. Dabei ist eine erste Art von Lagen aus Plattenelementen 1 gebildet, welche vorliegend insgesamt sieben benachbarte, endseitig verschlossene Flachrohre 2 umfassen.

Diese sind einstückig miteinander verbunden, jedoch hermetisch voneinander getrennt. Jedes der Flachrohre 2 bildet ein hermetisch geschlossenes Hohlelement bzw. einen durchgehenden Hohlraum aus, der eine erste Zone 2a und eine zweite Zone 2b hat. Die Flachrohre sind an beiden Stirnseiten geschlossen.

Zwischen den beiden Zonen 2a, 2b ist ein leerer Zwischenraum 2c vorgesehen, der eine gewisse Beabstandung der Zonen 2a, 2b bewirkt. In der ersten Zone 2a ist jeweils ein adsorbierendes Mittel, insbesondere Zeolith, vorgesehen, welches mit der Außenwandung des Flachrohres 2 in möglichst gutem thermischen Kontakt steht. Die zweite Zone 2b ist innenseitig mit einer geeigneten Kapillarstruktur ausgekleidet, die eine möglichst effektive Speicherung einer flüssigen Phase eines in dem Flachrohr 2 vorgesehenen Arbeitsmittels, insbesondere Wasser, ermöglichen. Die Zone 2a bildet somit eine Adsorber-Desorber-Zone und die Zone 2b bildet eine Verdampfer-Kondensator-Zone. Hinsichtlich der genauen Ausgestaltung der Zonen wird insbesondere auf die Offenbarung der Druckschrift DE 198 18 807 A1 Bezug genommen. Bei einer alternativen bevorzugten Ausführungsform ist das adsorbierende Mittel Aktivkohle und das Arbeitsmittel Wasser. Unabhängig von den erwähnten Paaren von adsorbierendem Mittel und Arbeitsmittel sind in sämtlichen der Ausführungsbeispiele der Bauart nach Adsorptions-Wärmepumpen beschrieben. Die Erfindung ist wie eingangs erwähnt nicht auf dieses Funktionsprinzip beschränkt, sondern kann auch andere Prozesse bzw. Reaktionen eines Arbeitsmittels umfassen.

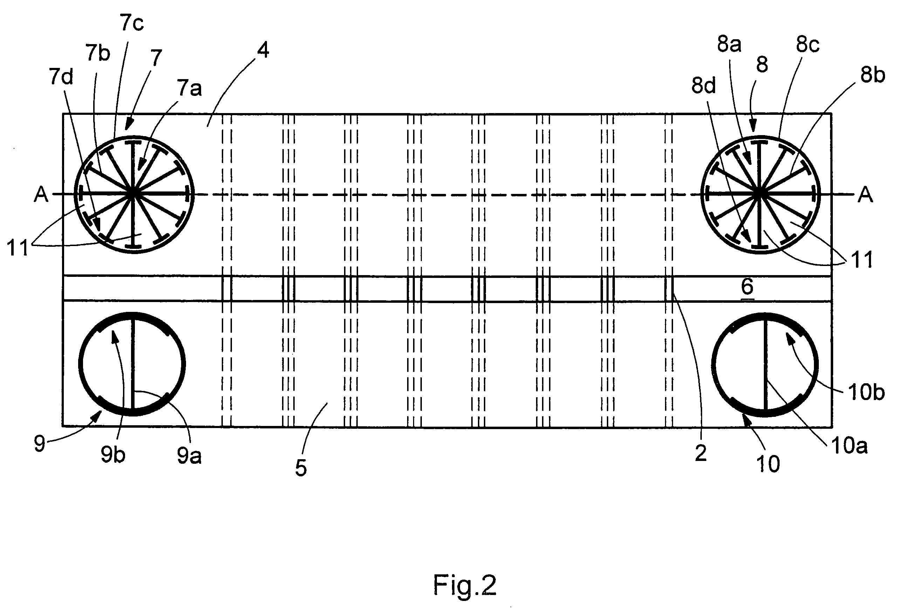

Zwischen zwei Plattenelementen 1 befindet sich jeweils eine Lage 3, innerhalb derer ein Durchtritt eines ersten Fluids und eines zweiten Fluids vorgesehen ist. Dabei steht das erste Fluid mit den ersten Zonen 2a und das zweite Fluid mit den zweiten Zonen 2b der Plattenelemente 1 während des Durchtritts durch die Lagen 3 in thermischer Verbindung. Die Lage 3 umfasst eine erste Art von Hohlplatten 4 und eine zweite Art von Hohlplatten 5; auch diese sind stirnseitig und an ihren oberen und unteren Längsseiten gen schlossen. Die Hohlplatten 4, 5 sind mit den jeweils benachbarten Plattenelementen 1 flächig verlötet, verklebt oder gespannt, um einen guten thermischen Kontakt zu gewährleisten. Zwischen zwei Hohlplatten 4, 5 der gleichen Lage befindet sich eine Lücke 6, die einen thermischen Kontakt zwischen den Hohlplatten 4, 5 weitgehend vermeidet. Die Schnittsdarstellung nach Fig. 2 zeigt einen Querschnitt in der Ebene der Hohlplatten 4, 5, wobei die Grenzen der Hohlräume 2 der Plattenelemente 1 als gestrichelte Linien angezeigt sind. Die Hohlplatten 4 und 5 können hier nicht gezeigte innere Strukturen Berippungen, Turbulenzeinlagen und dergleichen zur Verbesserung des Wärmeübergangs des diese durchströmenden Fluids an die Kontaktflächen zu den Plattenelementen 1 enthalten.

Senkrecht zu den Ebenen der Plattenelemente 1 und der Hohlplatten 4, 5 sind in endseitigen Bereichen der Hohlplatten 4, 5 Verteilervorrichtungen 7, 8, 9, 10 vorgesehen, die jeweils im Wesentlichen die Form eines Zylinders aufweisen. Ein erster Zylinder 7 und ein zweiter Zylinder 8 sind dabei in gegenüberliegenden Endbereichen der ersten Hohlplatten 4 vorgesehen und ein dritter Zylinder 9 und ein vierter Zylinder 10 sind in gegenüberliegend endseitigen Bereichen der Hohlplatten 5 vorgesehen. Dabei dienen die ersten beiden Zylinder 7, 8 der Verteilung eines ersten Fluids durch in den Hohlplatten 4 ausgebildete Durchtrittsbereiche erster Art und das Paar von Zylindern 9, 10 dient der Steuerung bzw. Verteilung der Strömung eines zweiten Fluides durch die Hohlplatten 5 und deren Durchtrittsbereiche zweiter Art.

Jeder der Zylinder 7, 8, 9, 10 hat einen in einem zylindrischen Innenumfang eines feststehenden Hohlzylinders geführten drehbaren Verteilereinsatz 7a, 8a, 9a, 10a. Der erste Verteilereinsatz 7a und der zweite Verteilereinsatz 8a sind im Wesentlichen gleichbauend ausgebildet. Jeder der Verteilereinsätze 7a, 8a, mittels derer eine Durchströmung des ersten Fluids gesteuert wird, umfasst eine Anzahl von wendelförmigen Kammern 11, welche durch spiralig ausgeformte Trennwände 7b, 8b und die Innenumfangswandungen 7c und 8c der Zylinder 7, 8 gebildet werden. Radial endseitig der Trennwände 7b, 8b sind jeweils Fahnen 7d, 8d an den Trennwänden angebracht, die Teil der zylindrischen Innenumfangswandung 7c abdecken.

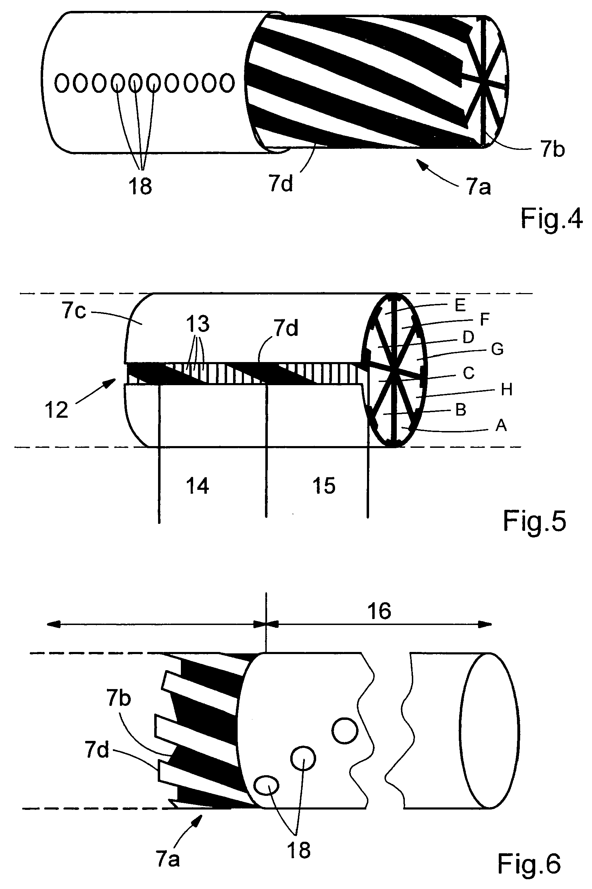

Die räumlichen Darstellungen gemäß Fig. 4 bis Fig. 6 der zylindrischen Verteilvorrichtung 7 verdeutlichen deren Funktion. Es wird darauf hingewiesen, dass in den Zeichnungen die genaue Anzahl der wendelförmigen Kammern 11 variiert; so sind z. B. in Fig. 2 12 Kammern und in Fig. 4 bis Fig. 6 nur jeweils acht Kammern dargestellt. In Fig. 5 sind diese acht Kammern mit den Buchstaben A bis H bezeichnet. Fig. 5 zeigt insbesondere einen schlitzförmigen Öffnungsbereich 12 in der zylindrischen Wandung 7c, durch den das Fluid in die Durchtrittsbereiche 13 der Hohlplatten 4 eintritt. Eine Anzahl von Durchtrittsbereichen 13 ist dabei jeweils gleichzeitig mit einer Kammer 11 des Verteilereinsatzes 7a verbunden. In Fig. 5 ist ein so gebildeter erster Strömungsweg 14 und ein zweiter Strömungsweg 15 gekennzeichnet, welche jeweils gleichzeitig mit mehreren Durchtrittsbereichen 13 bzw. Hohlplatten 4 in Verbindung stehen. Der Strömungsweg 14 ist vorliegend mit der Kammer B und der Strömungsweg 15 mit der Kammer C verbunden. Ersichtlich haben die Fahnen 7d durch ihre spiralförmige abschnittsweise Abdeckung der Innenumfangswandung 7c die Wirkung, dass keiner der Durchtrittsbereiche 13 mit mehr als einem Strömungsweg 14, 15 bzw. mehr als einer einzelnen Kammer A-H in Verbindung steht.

Die Verteilereinsätze 7a sind zweckmäßig so ausgebildet, dass jede ihre gewendelten Kammern 11 bzw. spiralig ausgeformten Trennwände 7b über die Länge des Verteilereinsatzes 7a und der Stapelhöhe der Platten 1, 4, 5 der Wärmepumpe eine volle Drehung um die Symmetrieachse des Zylinders aufweisen. sehen ist. Dabei steht das erste Fluid mit den ersten Zonen 2a und das zweite Fluid mit den zweiten Zonen 2b der Plattenelemente 1 während des Durchtritts durch die Lagen 3 in thermischer Verbindung. Die Lage 3 umfasst eine erste Art von Hohlplatten 4 und eine zweite Art von Hohlplatten 5; auch diese sind stirnseitig und an ihren oberen und unteren Längsseiten geschlossen. Die Hohlplatten 4, 5 sind mit den jeweils benachbarten Plattenelementen 1 flächig verlötet, verklebt oder gespannt, um einen guten thermischen Kontakt zu gewährleisten. Zwischen zwei Hohlplatten 4, 5 der gleichen Lage befindet sich eine Lücke 6, die einen thermischen Kontakt zwischen den Hohlplatten 4, 5 weitgehend vermeidet. Die Schnittdarstellung nach Fig. 2 zeigt einen Querschnitt in der Ebene der Hohlplatten 4, 5, wobei die Grenzen der Hohlräume 2 der Plattenelemente 1 als gestrichelte Linien angezeigt sind. Die Hohlplatten 4 und 5 können hier nicht gezeigte innere Strukturen Berippungen, Turbulenzeinlagen und dergleichen zur Verbesserung des Wärmeübergangs des diese durchströmenden Fluids an die Kontaktflächen zu den Plattenelementen 1 enthalten.

Senkrecht zu den Ebenen der Plattenelemente 1 und der Hohlplatten 4, 5 sind in endseitigen Bereichen der Hohlplatten 4, 5 Verteilervorrichtungen 7, 8, 9, 10 vorgesehen, die jeweils im Wesentlichen die Form eines Zylinders aufweisen. Ein erster Zylinder 7 und ein zweiter Zylinder 8 sind dabei in gegenüberliegenden Endbereichen der ersten Hohlplatten 4 vorgesehen und ein dritter Zylinder 9 und ein vierter Zylinder 10 sind in gegenüberliegend endseitigen Bereichen der Hohlplatten 5 vorgesehen. Dabei dienen die ersten beiden Zylinder 7, 8 der Verteilung eines ersten Fluids durch in den Hohlplatten 4 ausgebildete Durchtrittsbereiche erster Art und das Paar von Zylindern 9, 10 dient der Steuerung bzw. Verteilung der Strömung eines zweiten Fluides durch die Hohlplatten 5 und deren Durchtrittsbereiche zweiter Art.

Jeder der Zylinder 7, 8, 9, 10 hat einen in einem zylindrischen Innenumfang eines feststehenden Hohlzylinders geführten drehbaren Verteilereinsatz 7a, 8a, 9a, 10a. Der erste Verteilereinsatz 7a und der zweite Verteilereinsatz 8a sind im Wesentlichen gleichbauend ausgebildet. Jeder der Verteilereinsätze 7a, 8a, mittels derer eine Durchströmung des ersten Fluids gesteuert wird, 24 mit Lüfter 25 ist zwischen zwei Ringräumen 19 der zweiten Verteilvorrichtung 8 angeordnet. Vor dem Kühler 24 ist zudem eine Pumpe 26 zur Umwälzung des ersten Fluids vorgesehen.

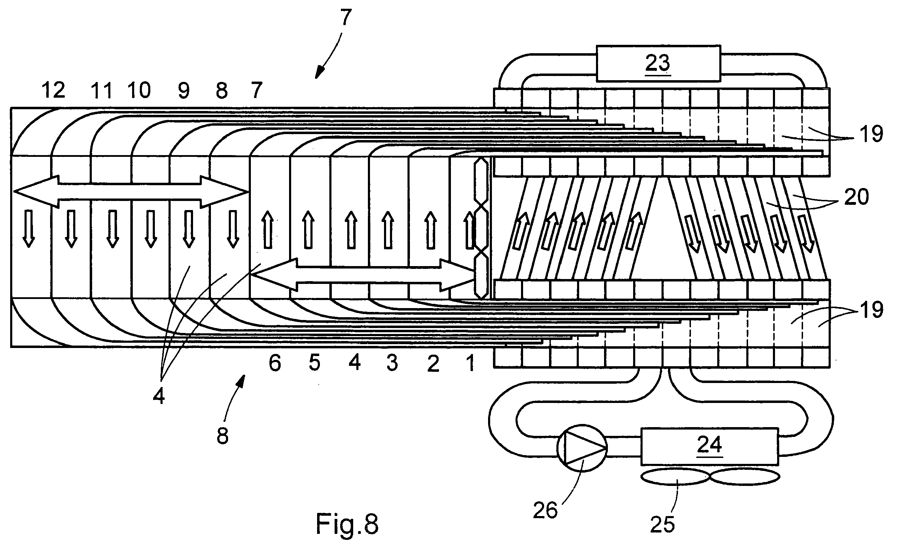

Fig. 8 verdeutlicht insbesondere die Verschaltung der einzelnen Strömungswege auch hinsichtlich ihrer Strömungsrichtung zwischen den Plattenelementen 1. Es sind symbolisch drei benachbarte Hohlräume 2 eines Plattenelements 1 dargestellt, deren Achsen sich senkrecht zur Zeichnungsebene erstrecken und die von dem ersten Wärmeträgerfluid umströmt werden (entsprechend der Pfeilrichtung). Insgesamt weist die Wärmepumpe nach Fig. 8 zwölf separate Strömungswege auf, so dass jede der Verteilvorrichtungen 7, 8 jeweils zwölf wendelförmige Kammern aufweist. Die zwölf Strömungswege im Tauscherbereich sind in Fig. 8 mit den arabischen Ziffern 1-12 durchnummeriert. Dabei bilden die ersten sechs Strömungswege 1-6 eine erste Gruppe von Strömungswegen, und die Strömungswege 7-12 bilden eine zweite Gruppe von Strömungswegen. Die Gruppen sind durch Doppelpfeile gekennzeichnet. Sämtliche der Strömungswege innerhalb einer der beiden Gruppen sind jeweils benachbart und gleichgerichtet, wie die kleinen senkrechten Pfeile im Bereich der Hohlplatten andeuten. Die Strömungsrichtung der zweiten Gruppe verläuft dabei entgegengesetzt zu der Strömungsrichtung der ersten Gruppe. In der Zeichnung Fig. 8 sind die Temperaturen des ersten Fluids in den einzelnen Strömungswegen durch unterschiedliche Grauskalierung dargestellt. Die Reihenfolge der Temperaturen der numerierten Strömungswege von kalt nach heiß ist somit 6-5-4-3-2-1-7-8-9-10-11-12. Zwischen den jeweils benachbarten Strömungswegen der beiden Gruppen, welches die Strömungswege 6 und 7 einerseits sowie 1 und 12 andererseits sind, liegt jeweils ein relativ großer Temperatursprung vor, wogegen die anderen Temperaturänderungen zwischen benachbarten Strömungswegen relativ klein sind. Insbesondere durch diese Aufteilung in Kombination mit der nachfolgend erläuterten Verschiebung der Durchströmungswege und die äußere Beschaltung mit einem Heizer 23 und einem Rückkühler 24 wird ein besonders hoher Wirkungsgrad bei gegebener Baugröße der Wärmepumpe erreicht. Dies ergibt sich aus einer stufigen Aufnahme sensibler Wärme aus abzukühlenden Plattenelementen 1 einer ersten Gruppe von Strömunsgbereichen (rechter Doppelpfeil in Fig. 8) zur Vorwärmung aufzuheizender Plattenelemente 1 einer zweiten Gruppe von Stromungsbereichen (linker Doppelpfeil in Fig. 8).

Durch ein synchrones Drehen der beiden Verteilereinsätze 7a, 8a werden nunmehr die Strömungswege entsprechend der sich ändernden Verbindungen der wendelförmigen Kammern 11 mit den Durchtrittsbereichen 13 in der Stapelrichtung der Plattenelemente 1 bzw. der Hohlelemente 4 verschoben. Diese Veränderung der Kontaktierung der einzelnen Kammern 11 mit den einzelnen Durchtrittsbereichen 13 ist gleichbedeutend einer Wanderung der Strömungswege in Stapelrichtung, im vorliegenden Fall nach rechts. Durch die Verschiebung der Strömungswege nach rechts werden die beispielhaft eingezeichneten Sorptionsrohre 2 schrittweise immer weiter abgekühlt, bis die kälteste Zone diese Elemente erreicht hat. Ein Großteil der dabei übertragenen Adsorptionswärme wird dabei auf das Wärmeträger-Fluid übertragen, dass sich dabei immer weiter erwärmt. Die Heizleistung des nachfolgenden Heizelements 23 kann dadurch reduziert werden. Grundsätzlich erfolgt die Wanderung der Strömungswege bzw. die Drehung der Verteilereinsätze recht langsam, da diese an die Trägheit des Wärmeaustauschs zwischen dem ersten Fluid und den jeweiligen Hohlelementen 2 sowie des Stofftransports innerhalb der Hohlelemente 2 angepasst ist.

Im Ausführungsbeispiel nach Fig. 8 ist das erste Fluid ein Thermoöl ("Marlotherm"), welches in flüssiger Phase vorliegt. Grundsätzlich kann das erste Fluid auch gasförmig sein, jedoch ist insbesondere bei Ausführungen mit vielen getrennten Strömungswegen eine Flüssigkeit als erstes Fluid zu bevorzugen.

Die erste Gruppe von Strömungswegen (Strömungswege 1-6), die zudem die ersten sechs Strömungswege nach der Kühlung im Kühlelement 24 sind, dienen der Abkühlung der ersten Zonen bzw. der Sorptionsbereiche der Hohlräume 2, wogegen die zweiten sechs Strömungswege einer Aufheizung dieser Bereiche dienen.

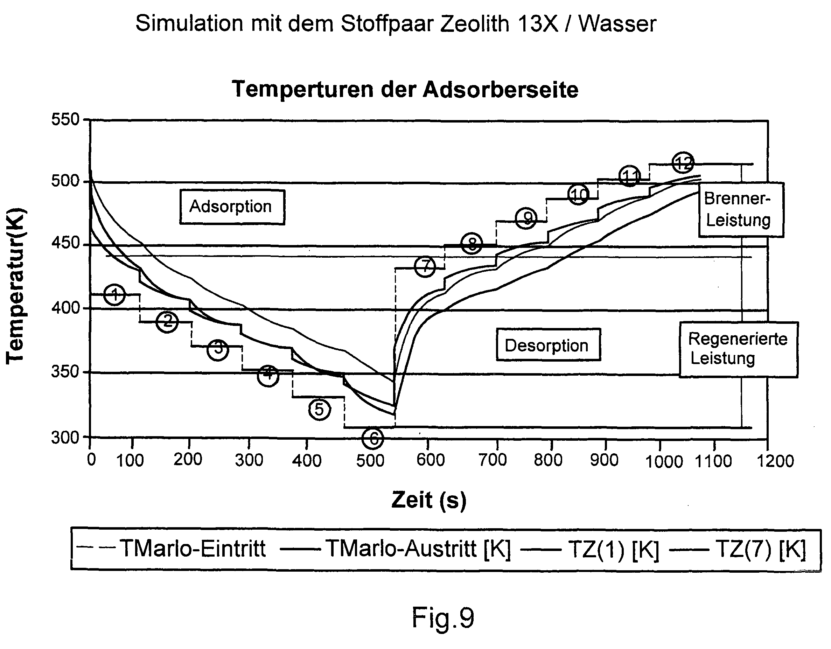

In Fig. 9 sind entsprechende zeitliche Verläufe der Temperaturen über einen Zyklus an verschiedenen Messstellen des in Fig. 8 beispielhaft eingezeich-Fig. 8 verdeutlicht insbesondere die Verschaltung der einzelnen Strömungswege auch hinsichtlich ihrer Strömungsrichtung zwischen den Plattenelementen 1. Es sind symbolisch drei benachbarte Hohlräume 2 eines Plattenelements 1 dargestellt, deren Achsen sich senkrecht zur Zeichnungsebene erstrecken und die von dem ersten Wärmeträgerfluid umströmt werden (entsprechend der Pfeilrichtung). Insgesamt weist die Wärmepumpe nach Fig. 8 zwölf separate Strömungswege auf, so dass jede der Verteilvorrichtungen 7, 8 jeweils zwölf wendelförmige Kammern aufweist. Die zwölf Strömungswege im Tauscherbereich sind in Fig. 8 mit den arabischen Ziffern 1-12 durchnummeriert. Dabei bilden die ersten sechs Strömungswege 1-6 eine erste Gruppe von Strömungswegen, und die Strömungswege 7-12 bilden eine zweite Gruppe von Strömungswegen. Die Gruppen sind durch Doppelpfeile gekennzeichnet. Sämtliche der Strömungswege innerhalb einer der beiden Gruppen sind jeweils benachbart und gleichgerichtet, wie die kleinen senkrechten Pfeile im Bereich der Hohlplatten andeuten. Die Strömungsrichtung der zweiten Gruppe verläuft dabei entgegengesetzt zu der Strömungsrichtung der ersten Gruppe. In der Zeichnung Fig. 8 sind die Temperaturen des ersten Fluids in den einzelnen Strömungswegen durch unterschiedliche Grauskalierung dargestellt. Die Reihenfolge der Temperaturen der nummerierten Strömungswege von kalt nach heiß ist somit 6-5-4-3-2-1-7-8-9-10-11-12. Zwischen den jeweils benachbarten Strömungswegen der beiden Gruppen, welches die Strömungswege 6 und 7 einerseits sowie 1 und 12 andererseits sind, liegt jeweils ein relativ großer Temperatursprung vor, wogegen die anderen Temperaturänderungen zwischen benachbarten Strömungswegen relativ klein sind. Insbesondere durch diese Aufteilung in Kombination mit der nachfolgend erläuterten Verschiebung der Durchströmungswege und die äußere Beschaltung mit einem Heizer 23 und einem Rückkühler 24 wird ein besonders hoher Wirkungsgrad bei gegebener Baugröße der Wärmepumpe erreicht. Dies ergibt sich aus einer stufigen Aufnahme sensibler Wärme aus abzukühlenden Plattenelementen 1 einer ersten Gruppe von Strömungsbereichen (rechter Doppelpfeil in Fig. 8) zur Vorwärmung aufzuheizender Plattenelemente 1 einer zweiten Gruppe von Strömungsbereichen (linker Doppelpfeil in Fig. 8). für viele Fälle eine ausreichende Differenzierung der Strömungswege des zweiten Fluids durch die Wärmepumpe gewährleistet. Die Erfindung funktioniert nun unter Berücksichtigung der Darstellungen gemäß Fig. 8 bis Fig. 11 wie folgt:
Zum Startzeitpunkt befindet sich eine ausgewählte Sorptionsplatte (Hohlraum 2) auf der höchsten Temperatur. In der Darstellung nach Fig. 8 ist dies die in Flussrichtung letzte Sorptionsplatte bzw. der letzte Hohlraum 2 des Strömungsweges "1". Das Plattenelement hat dabei insgesamt sieben zusammenhängende Hohlräume 2, von denen in der schematisierten Darstellung nach Fig. 8 lediglich drei Hohlräume angedeutet sind.

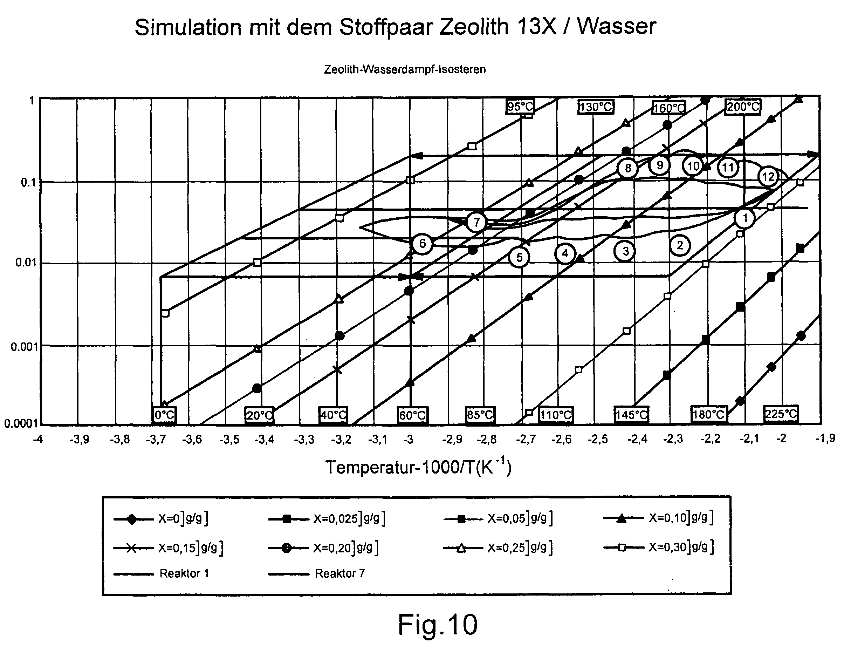

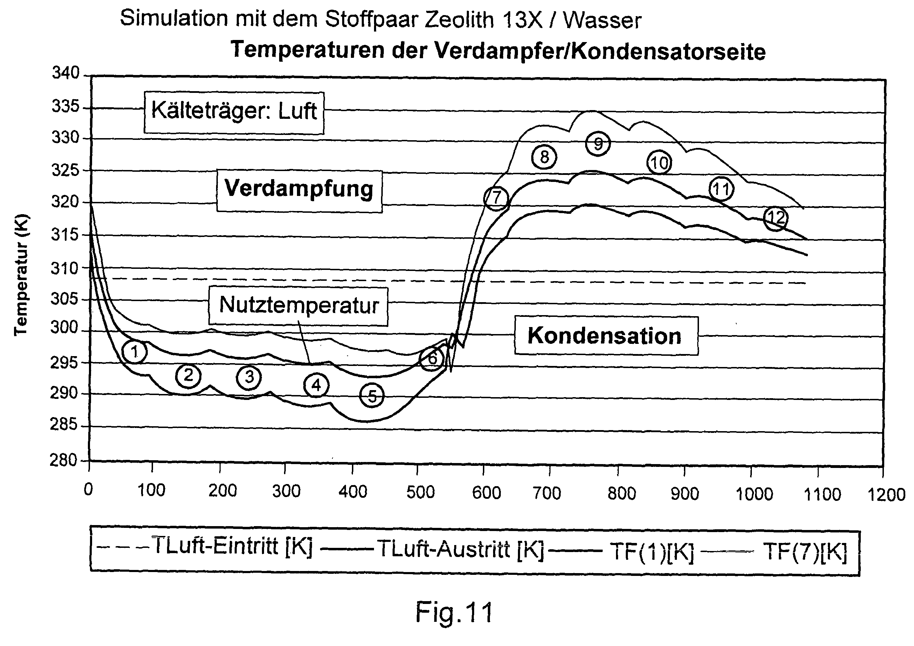

Durch langsames Weiterdrehen der Verteilereinsätze 7a, 8a wandern alle zwölf Strömungswege, die jeweils eine unterschiedliche Temperatur aufweisen nach rechts, wodurch der Hohlraum zunächst mit zunehmend kühlerem ersten Fluid in Kontakt kommt. Durch Adsorption von Arbeitsmittel, vorliegend Wasserdampf, sinkt der Druck in den Hohlräumen 2 (siehe Fig. 10) und es kommt in den zweiten Zonen der Hohlräume 2 zu einer Verdampfung von Wasser, wodurch diese Seite abgekühlt wird (siehe Fig. 11). Hierdurch wird dem zweiten Fluid, vorliegend Luft, im Zuge des Vorbeiströmens an der zweiten Zone des Hohlraumes 2 kontinuierlich Wärme entzogen.

Nach Durchlauf der kältesten Zone Nummer 6 gemäß Fig. 8, die unmittelbar nach dem Kühler 24 folgt und etwa der Umgebungstemperatur entspricht (vorliegend 30° Celsius) hat das Sorptionsmittel im Hohlraum 2 seine maximale Beladung erreicht und es beginnt nachfolgend die Aufheiz- und Desorptionsphase.

Im vorliegenden Beispiel springt die Fluidtemperatur schnell auf circa 160 °C, was dem Übergang von Strömungswege Nr. 6 auf Strömungsweg Nr. 7 entspricht. Hierdurch wird das Sorptionsmittel schnell erwärmt. Nach Durchlaufen einer Gleichgewichtsbeladung geht die Adsorption in eine Desorption über, wodurch der Wasserdampf-Partialdruck schnell ansteigt (siehe Fig. 10), so dass in der zweiten Zone die Verdampfung in eine Kondensation übergeht (siehe Fig. 11). Bei diesem Teilprozess wandert das Arbeitsmittel Wasser getrieben durch die stufenweise Temperaturerhöhung innerhalb eines Hohlraums 2 kontinuierlich vom Adsorptionsmittel (erste Zone) zur Kondensationszone (zweite Zone) und wird dort durch eine nicht näher dargestellte, einem Heatpipe ähnliche Kapillarstruktur gehalten und zwecks gutem thermischen Kontakt auf der Wandung der zweiten Zone des Hohlraums 2 homogen verteilt.

Hierbei ist es vorteilhaft, die Wärmepumpe so im Raum auszurichten, dass die Achsen der Hohlräume 2 im Wesentlichen horizontal liegen, um ungünstige Schwerkrafteinflüsse auf die Verteilung des Arbeitsmittels zu vermeiden.

Sowohl der Adsorptions-Verdampfungsprozess (Nutzprozess) als auch der Desorptions-Kondensationsprozess (Regenerationsprozess) sind durch Anpassung der Drehgeschwindigkeit der Verteilereinsätze zeitlich so dimensioniert, dass ein Beladungsbereich des Adsorptionsmittels ausgenutzt wird, der zu einem guten Kompromiss zwischen Leistungsdichte und Verhältnis von Nutzwärme zu Antriebswärme der Gesamtvorrichtung führt. Im vorliegenden simulierten Beispiel sind beide Teilprozesse gleichlang. Eine asymmetrische Zeitaufteilung der beiden Teilprozesse ist jedoch problemlos möglich, indem die Kammern 11 der Verteilereinsätze 7a, 8a entsprechend asymmetrisch längs des Umfangs verteilt sind. Dies kann zweckmäßig durch Anpassung der Öffnungswinkelaufteilung für die Kammersegmente realisiert werden.

Ebenso kann es zu Optimierung der Funktionsweise sinnvoll sein, eine Phasenverschiebung zwischen der Steuerung der Verteilvorrichtungen 7, 8 für die Adsorptions-Desorptions-Zone relativ zu den Verteilvorrichtungen 9, 10 für die Verdampfungs-Kondensationszone einzustellen. Aus Fig. 9 und Fig. 11 kann entnommen werden, dass der Wechsel von Verdampfung zur Kondensation dem Wechsel zwischen Adsorption und Desorption durch thermische Trägheiten bedingt nachläuft. Eine definierte, insbesondere einstellbare Phasenverschiebung kann hier eine Verbesserung bringen.

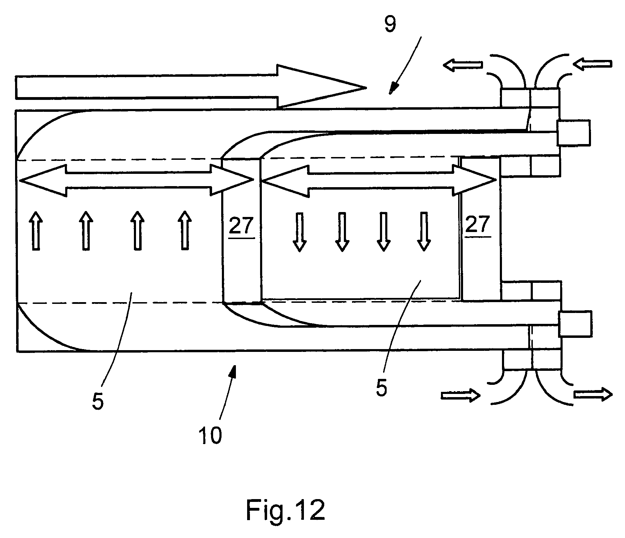

In einer ersten Abwandlung der zuvor beschriebenen Wärmepumpe können sogenannte adiabatische Phasen eingeführt werden. Dies ist in der Darstellung nach Fig. 12, welche sich an die Darstellung nach Fig. 8 anlehnt, durch isolierte Strömungswege 27 bzw. Isolierung jeweils eines oder mehrerer Durchtrittsbereiche gegen Fluid-Durchströmung gegeben. Die Darstellung bezieht sich auf die Führung des zweiten Fluids innerhalb der Verdampfungs-/Kondensationszone. Hierdurch ist eine bessere Isolierung der benachbarten Strömungswege der abkühlenden Zone für die Kondensation und der aufheizenden Zone für die Verdampfung gegeben, so dass der an dieser Stelle wegen des Temperatursprungs besonders nachteilige Temperaturfluss zwischen benachbarten Strömungswegen verringert wird. Zur Realisierung solcher adiabatischer Phasen 27 werden auf einfache Weise die Fahnen9b, 10b der entsprechenden Kammern 11 der Verteilereinsätze 7a, 7b besonders groß geformt. Hierdurch decken diese besonders geformten Fahnen einen oder mehrere der Durchtrittsbereiche ab, die zwischen den Strömungswegen für die Verdampfung und Kondensation liegen, so dass in diesen Durchtrittsbereichen kein Fluidtransport stattfindet. Fig. 12 stellt die zu Fig. 8 korrespondierende Lage der Strömungswege in der Verdampfungs-/Kondensationszone dar. Wesentlich dabei ist, dass die Strömungsrichtungen des zweiten Fluids in Fig. 12 auch den Strömungsrichtungen des ersten Fluids in Fig. 8 entgegengerichet sind und untereinander auch entgegengerichtet sind.

Wie bereits erwähnt liegt der Schwerpunkt der Weiterentwicklung einer erfindungsgemäßen Wärmepumpe auf der Steuerung des Adsorptions-Desorptionsprozesses bzw. der Prozesse der ersten Zonen und der korrespondierenden Steuerung des zweiten Fluids in der zweiten Zone. Wegen der geringen Temperaturunterschiede sind in der zweiten, den Verdampfungs-/Kondensationsprozess steuernden Zone jedoch mit Ausnahme adiabater Zonen meist weniger Kammern der Verteilereinsätze und damit weniger unterschiedliche Strömungswege erforderlich. Im bisher beschriebenen simulierten Beispiel liegt daher nur eine Gruppe von Strömungswegen für die Verdampfung und eine für die Kondensation vor, wie es im Prinzip aus der DE 198 18 807 A1 bekannt ist. Zur Verbesserung der Wärmepumpe kann es jedoch vorgesehen sein, auch in diesem Bereich eine Mehrfachdurchströmung vorzusehen, die entsprechend der Aufteilung der Kammern 11 der Verteilereinsätze 9a, 10a erfolgt. Dabei können einzelne Kammersegmente als Umlenksegmente, Verteil- und Sammelsegmente eingesetzt werden.

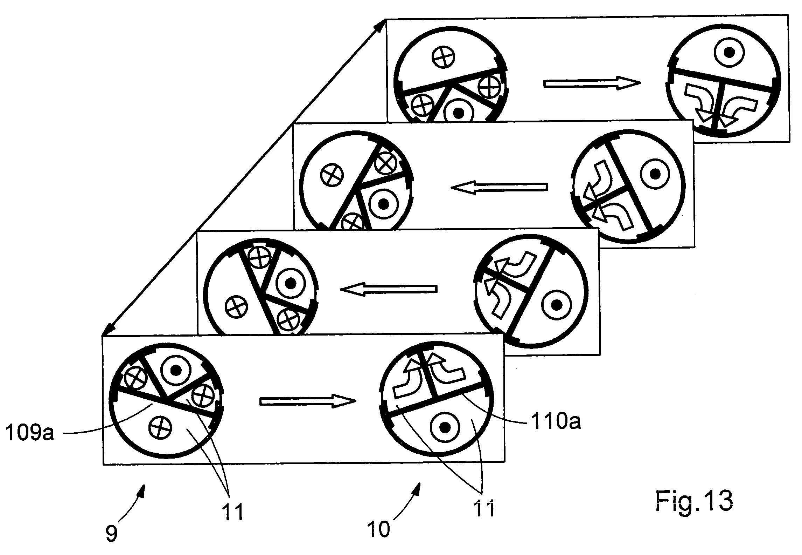

Beispielhaft zeigt Fig. 13 eine Anordnung, bei der die beiden Verteilvorrichtungen 9, 10 unterschiedlich geformte Verteilereinsätze 109a, 110a aufweisen. Hierdurch kann abhängig vom eingesetzten Stoffsystem eine etwas tiefere Nutztemperatur erreicht werden.

Gemäß der Darstellung nach Fig. 13 sind vier Schnitte in unterschiedlichen Ebenen entlang der Stapelrichtung der Wärmepumpe gezeigt.

Der erste Verteilereinsatz 109a hat gemäß einer Querschnittsdarstellung eine Kammer mit einem Öffnungswinkel von 180°Grad, zwei symmetrisch daran anschließende Kammern mit einem Öffnungswinkel von 45°Grad und eine dazwischen angeordnete Kammer mit einem Öffnungswinkel von 90°Grad. Der andere Verteilereinsatz 110a hat eine Kammer mit Öffnungswinkel 180°Grad und zwei Kammern mit Öffnungswinkel 90°Grad. Strömungsrichtungen des Fluids sind jeweils mittels einer Pfleilspitze als aus der Zeichnungeebene heraus und mittels eines Pfeilschafts (Kreuzes) als in die Zeichnungsebene hinein angedeutet.

Das zu kühlende zweite Fluid wird in die beiden 45°Grad-Kammern des linken Verteilereinsatzes geführt und tritt von links jeweils in den ersten und in den letzten der dargestellten Teilblöcke ein. Auf der gegenüberliegenden Seite werden sie von den beiden 90°Grad-Kammern des Verteilereinsatzes 110a aufgenommen und auf die beiden mittleren Teilblöcke verteilt, die dann in Gegenrichtung durchströmt werden. In weiterer Ausgestaltung kann die Trennwand zwischen den beiden 90°Grad-Kammern entfallen, um eine Vermischung der beiden Teilströme aus den endseitigen Teilblöcken zu ermöglichen. Die beiden 180°-Kammern sind für die Kondensationszonen vorgesehen.

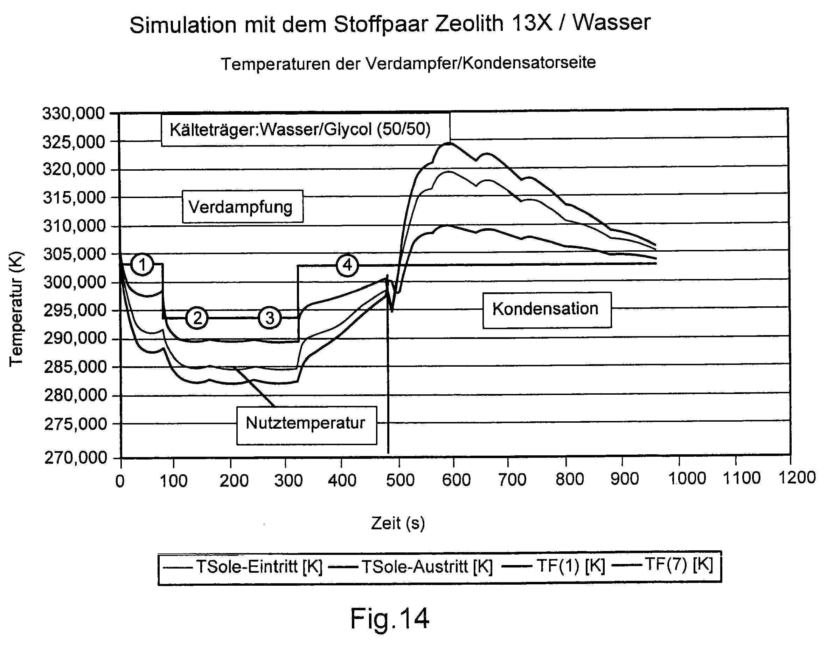

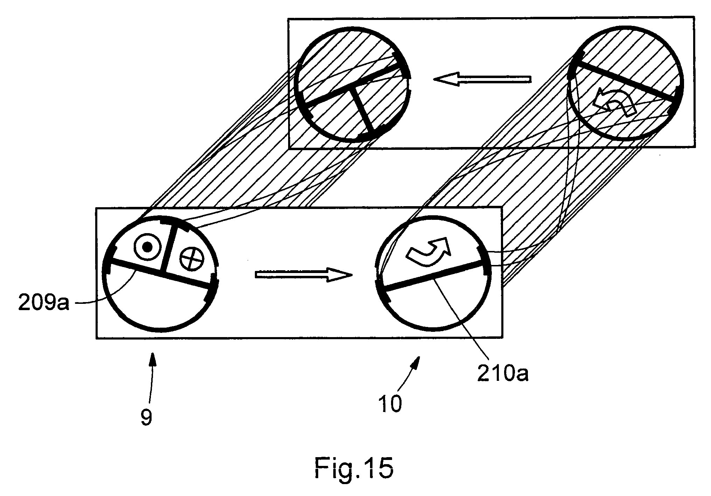

Das Diagramm gemäß Fig. 14 zeigt das Ergebnis der Abwandlung nach Fig. 13, wobei als zweites Fluid ein Wasser-Glykolgemisch Verwendung findet. Ersichtlich ist eine niedrigere Nutztemperatur von 285° Kelvin ermöglicht worden, die entsprechend nur in einem kürzeren Zeitbereich anliegt. Eine weitere Verbesserung würde eine gemäß Fig. 12 vorgeschlagene Einführung bezieht sich auf die Führung des zweiten Fluids innerhalb der Verdampfungs-/Kondensationszone. Hierdurch ist eine bessere Isolierung der benachbarten Strömungswege der abkühlenden Zone für die Kondensation und der aufheizenden Zone für die Verdampfung gegeben, so dass der an dieser Stelle wegen des Temperatursprungs besonders nachteilige Temperaturfluss zwischen benachbarten Strömungswegen verringert wird. Zur Realisierung solcher adiabatischer Phasen 27 werden auf einfache Weise die Fahnen9b, 10b der entsprechenden Kammern 11 der Verteilereinsätze 7a, 7b besonders groß geformt. Hierdurch decken diese besonders geformten Fahnen einen oder mehrere der Durchtrittsbereiche ab, die zwischen den Strömungswegen für die Verdampfung und Kondensation liegen, so dass in diesen Durchtrittsbereichen kein Fluidtransport stattfindet. Fig. 12 stellt die zu Fig. 8 korrespondierende Lage der Strömungswege in der Verdampfungs-/Kondensationszone dar. Wesentlich dabei ist, dass die Strömungsrichtungen des zweiten Fluids in Fig. 12 auch den Strömungsrichtungen des ersten Fluids in Fig. 8 entgegengerichtet sind und untereinander auch entgegengerichtet sind.

Wie bereits erwähnt liegt der Schwerpunkt der Weiterentwicklung einer erfindungsgemäßen Wärmepumpe auf der Steuerung des Adsorptions-Desorptionsprozesses bzw. der Prozesse der ersten Zonen und der korrespondierenden Steuerung des zweiten Fluids in der zweiten Zone. Wegen der geringen Temperaturunterschiede sind in der zweiten, den Verdampfungs-/Kondensationsprozess steuernden Zone jedoch mit Ausnahme adiabater Zonen meist weniger Kammern der Verteilereinsätze und damit weniger unterschiedliche Strömungswege erforderlich. Im bisher beschriebenen simulierten Beispiel liegt daher nur eine Gruppe von Strömungswegen für die Verdampfung und eine für die Kondensation vor, wie es im Prinzip aus der DE 198 18 807 A1 bekannt ist. Zur Verbesserung der Wärmepumpe kann es jedoch vorgesehen sein, auch in diesem Bereich eine Mehrfachdurchströmung vorzusehen, die entsprechend der Aufteilung der Kammern 11 der Verteilereinsätze 9a, 10a erfolgt. Dabei können einzelne Kammersegmente als Umlenksegmente, Verteil- und Sammelsegmente eingesetzt werden.

Beispielhaft zeigt Fig. 13 eine Anordnung, bei der die beiden Verteilvorrichtungen 9, 10 unterschiedlich geformte Verteilereinsätze 109a, 110a aufweisen. Hierdurch kann abhängig vom eingesetzten Stoffsystem eine etwas tiefere Nutztemperatur erreicht werden.

Gemäß der Darstellung nach Fig. 13 sind vier Schnitte in unterschiedlichen Ebenen entlang der Stapelrichtung der Wärmepumpe gezeigt.

Der erste Verteilereinsatz 109a hat gemäß einer Querschnittsdarstellung eine Kammer mit einem Öffnungswinkel von 180°Grad, zwei symmetrisch daran anschließende Kammern mit einem Öffnungswinkel von 45°Grad und eine dazwischen angeordnete Kammer mit einem Öffnungswinkel von 90°Grad. Der andere Verteilereinsatz 110a hat eine Kammer mit Öffnungswinkel 180°Grad und zwei Kammern mit Öffnungswinkel 90°Grad. Strömungsrichtungen des Fluids sind jeweils mittels einer Pfeilspitze als aus der Zeichnungsebene heraus und mittels eines Pfeilschafts (Kreuzes) als in die Zeichnungsebene hinein angedeutet.

Das zu kühlende zweite Fluid wird in die beiden 45°Grad-Kammern des linken Verteilereinsatzes geführt und tritt von links jeweils in den ersten und in den letzten der dargestellten Teilblöcke ein. Auf der gegenüberliegenden Seite werden sie von den beiden 90°Grad-Kammern des Verteilereinsatzes 110a aufgenommen und auf die beiden mittleren Teilblöcke verteilt, die dann in Gegenrichtung durchströmt werden. In weiterer Ausgestaltung kann die Trennwand zwischen den beiden 90°Grad-Kammern entfallen, um eine Vermischung der beiden Teilströme aus den endseitigen Teilblöcken zu ermöglichen. Die beiden 180°-Kammern sind für die Kondensationszonen vorgesehen.

Das Diagramm gemäß Fig. 14 zeigt das Ergebnis der Abwandlung nach Fig. 13, wobei als zweites Fluid ein Wasser-Glykolgemisch Verwendung findet. Ersichtlich ist eine niedrigere Nutztemperatur von 285° Kelvin ermöglicht worden, die entsprechend nur in einem kürzeren Zeitbereich anliegt. Eine weitere Verbesserung würde eine gemäß Fig. 12 vorgeschlagene Einführung Teilblock A zeigt in schematischer Darstellung die Lage der Verteileinsätze zu Beginn der Niedertemperatur-Verdampfungsstufe, die der Abkühlung des genutzten Fluidstroms dient.

Die zugeordneten Strömungswege werden in ihrer Breite in Stapelrichtung (siehe Darstellung Fig. 26) durch die Winkelgröße der Kammern definiert. Im Teilblock B befinden sich die Verteileinsätze in der Position für die nachfolgende Zwischentemperaturverdampfung. Die dem Strömungsweg zugeordneten kleineren Kammersegmente stehen in Strömungsverbindung mit den ebenfalls kleinen Kammersegmenten aus Teilblock D, der einen Strömungsbereich für eine Zwischentemperaturkondensation definiert. Dieser Teilblock D schließt sich dem Teilblock C an, der den Strömungsbereich für die Hochtemperaturkondensation definiert. Auf Teilblock D folgt wieder Teilblock A. Dieser separate Kreislauf oder Strömungsweg wird mit der separaten kleinen Umwälzpumpe 331 angetrieben.

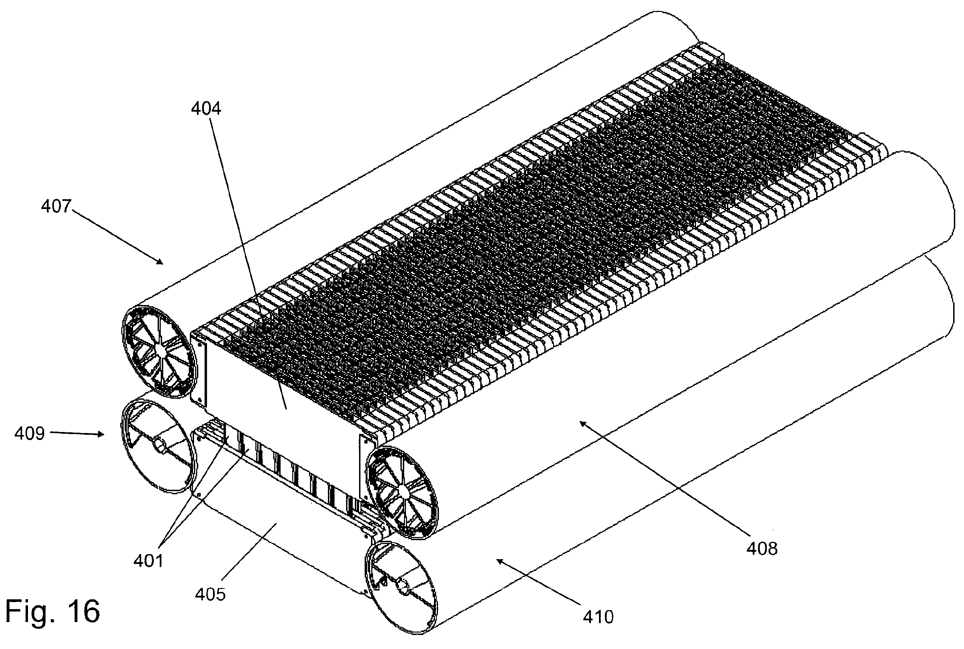

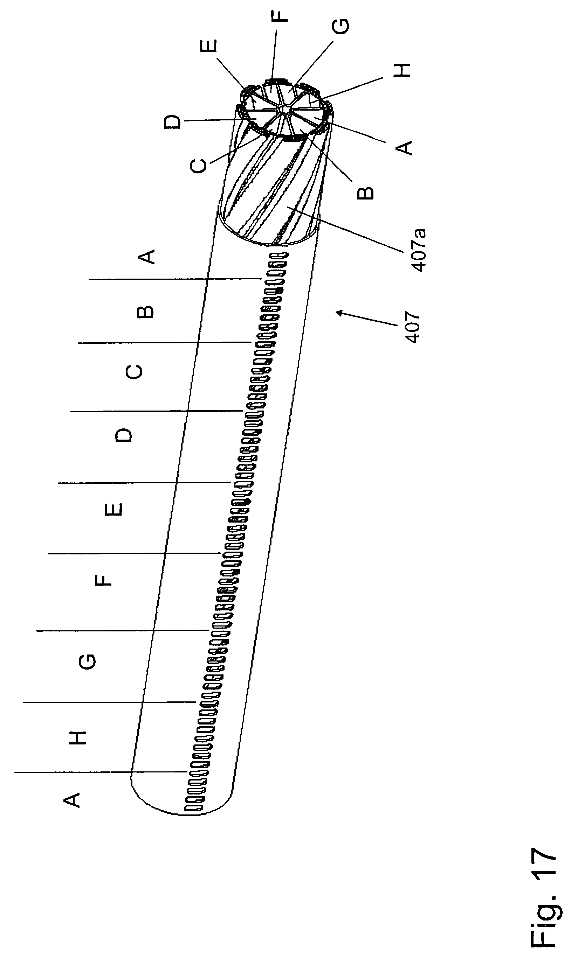

Eine weitere Ausführungsform der Wärmepumpe, die insbesondere eine konstruktive Variante darstellt, ist in Fig. 16 und Fig. 17 dargestellt. Im Unterschied zu der schematischen konstruktiven Lösung aus Fig. 1 sind hier die zylindrischen Verteilvorrichtungen 407, 408, 409, 410 als Module mit einer zylindrischen Außenwand ausgebildet, die endseitig außerhalb der Hohlplatten 404, 405 angeordnet sind. Die Verteilvorrichtungen sind dabei ohne die Anschlussbereiche dargestellt.

Wie insbesondere der Aufbau eines Zylinders 407 gemäß der Darstellung Fig. 17 zeigt, liegen wie in der schematischen Ausführung nach Fig. 5 jeweils acht separate Kammern A-H von gleichem Öffnungswinkel vor, was acht benachbarten Strömungswegen gleicher Breite durch den Stapel von Hohlelementen entspricht.

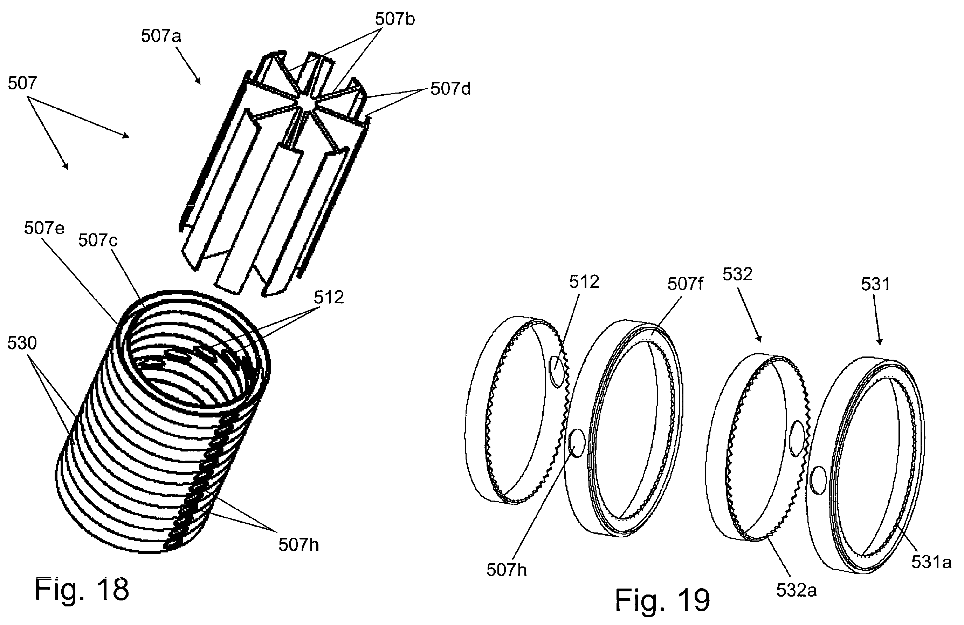

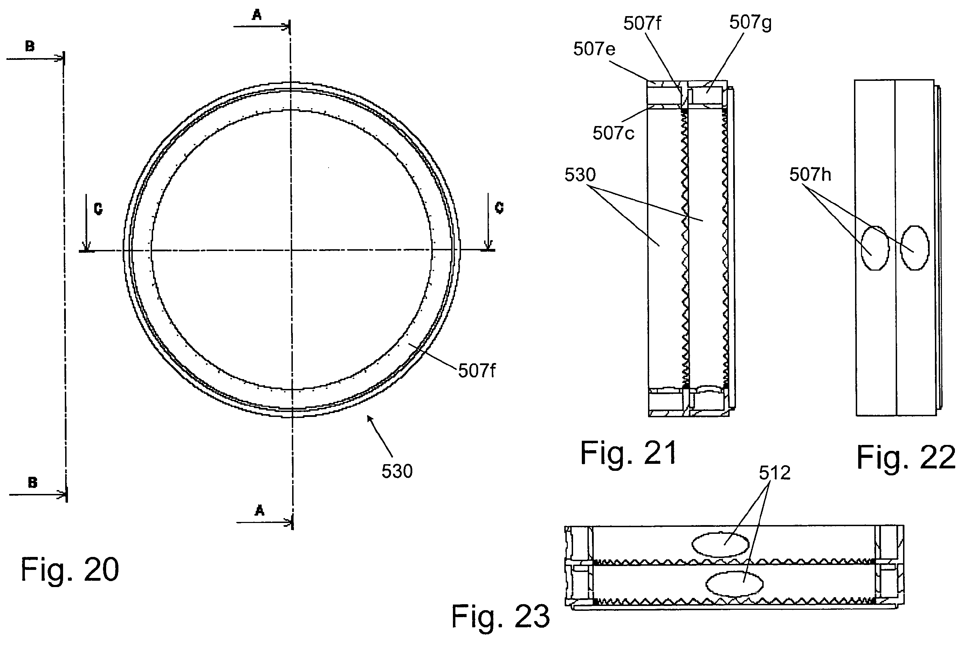

Ein weiteres Ausführungsbeispiel ist in Fig. 18 bis Fig. 24 dargestellt, wodurch eine besonders geeignete konstruktive Lösung gegeben ist. Ebenso wie bei den anderen beschriebenen Ausführungsbeispielen sind die Verteilvorrichtungen 507, 508 als Hohlzylinder mit einem drehbaren Verteilereinsatz 507a ausgebildet. Im Unterschied zu den zuvor beschriebenen Ausführungsbeispielen hat der Verteilereinsatz 507a jedoch Trennwände 507b mit Fahnen 507d, die in axialer Richtung (bzw. Stapelrichtung) gerade verlaufen und nicht spiralig gebogen sind. Hierdurch sind die Verteilereinsätze 507a besonders kostengünstig und einfach herstellbar.

Um eine entsprechende Verteilung des Fluids auf die mit der Drehung der Verteilereinsätze in Stapelrichtung wandernden Strömungswege zu erreichen, hat die den Verteilereinsatz 507a umgebende zylindrische Wand 507c eine Mehrzahl von Durchbrechungen 512, die in axialer Richtung aufeinander folgen und jeweils um einen kleinen Winkel versetzt zueinander angeordnet sind und somit auf einer Spirallinie entlang der Zylinderwand liegen. Über die gesamte axiale Länge der Zylinderwand 507c beschreibt die Spirallinie einen oder mehrere zweckmäßig vollständige Umläufe.

Die zylindrische Wandung 507c wird von einer äußeren Zylinderwand 507e umfangen, wobei durch radiale Trennwände 507f zwischen innerer Wand 507c und äußerer Wand 507e zu jeder der Durchbrechungen 512 eine Ringkammer 507g abgetrennt ist.

In der äußeren Wand 507e sind Anschlussöffnungen 507h jeweils zu jeder der Ringkammern ohne Winkelversatz auf einer geraden Linie fluchtend vorgesehen, durch die ein Anschluss an die Durchtrittsbereiche der Wärmepumpe gegeben ist.

Im Detail sind die einzelnen baugleichen Ringkammermodule 530 jeweils aus einem Außenring 531 und einem Innenring 532 zusammengesetzt, wobei der Außenring 532 eine radiale Abkragung zur Ausbildung der Trennwand 507f zwischen benachbarten Ringkammermodulen 530 aufweist. Vorliegend haben die Innenringe 532 und die Außenringe 531 korrespondierende Verzahnungen 531a, 532a, die zur Einstellung eines definierten Winkelversatzes der Durchbrechungen 512 im Zuge der Montage miteinander verrasten. Insbesondere bei einer automatisierten Fertigung kann auf eine solche Verzahnung verzichtet werden. Die Ringkammermodule 530 können aus einem oder mehreren geeigneten Materialien bestehen, wie zum Beispiel Kunststoff oder auch Aluminium.

Zur weiteren Vereinfachung der Herstellung können die Außenringe 531 der beiden gegenüberliegenden Verteilvorrichtungen 507, 508 zugleich mit zumindest einem Teil der sie verbindenden Durchtrittsbereiche 504 hergestellt werden, insbesondere mittels Kaltfließpressen. Die flachrohrartigen Durchtrittsbereiche 504 zwischen den Ringen 531 können noch durch geeignete Oberflächen-vergrößernde Turbulenzbleche oder durch aufzulötende Deckbleche vervollständigt werden.

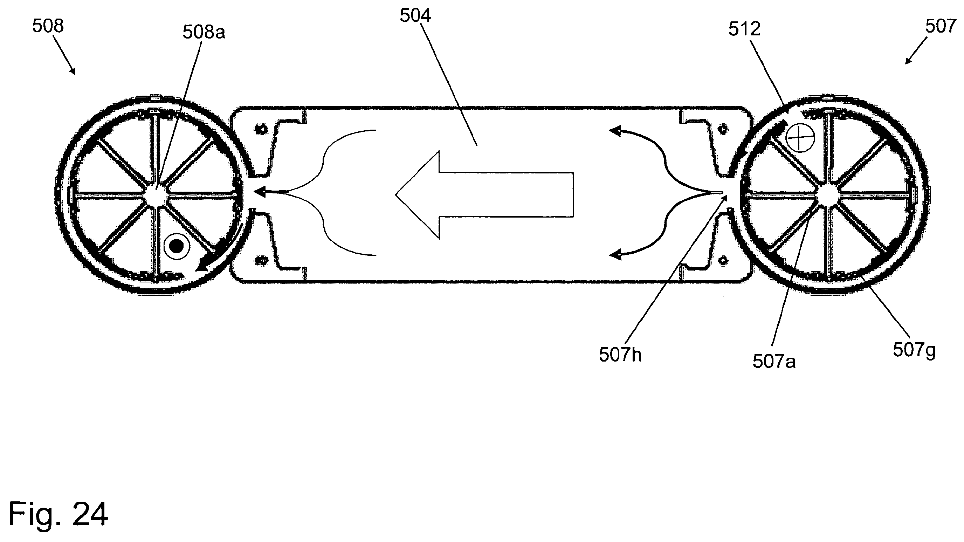

Eine schematische Schnittansicht durch die Durchtrittsbereiche zweiter Art der Wärmepumpe ist in Fig. 24 gezeigt. Das zweite Fluid durchströmt ausgehend von einer Kammer eines des axial geraden Verteilereinsatzes 507a eine oder mehrere hiermit deckende spiralig angeordnete Durchbrechungen 512 der inneren Wandung 507c und die mit diesen Durchbrechungen Öffnungen 512 verbundenen Ringkammern 507g. Nachfolgend strömt das Fluid durch die Öffnungen 507h der Außenwand 507e und durch die Durchtrittsbereiche 504 erster Art (oder auch zweiter Art). Nach Durchströmen der Durchtrittsbreiche 504 und entsprechendem Wärmeaustausch tritt das Fluid wieder in die gegenüberliegende, symmetrisch aufgebaute Verteilvorrichtung 508 ein. Ersichtlich ist die Funktion der Verteilung des Fluids auf eine Mehrzahl von Strömungswege, die zudem mit einer Drehung der Verteilereinsätze 507a wandern, völlig analog zu der Funktion eines Verteilereinsatzes mit spiralig gebogenen Trennwänden.

Zur weiteren Vereinfachung der Herstellung können die Außenringe 531 der beiden gegenüberliegenden Verteilvorrichtungen 507, 508 zugleich mit zumindest einem Teil der sie verbindenden Durchtrittsbereiche 504 hergestellt werden, insbesondere mittels Kaltfließpressen. Die flachrohrartigen Durchtrittsbereiche 504 zwischen den Ringen 531 können noch durch geeignete Oberflächen-vergrößernde Turbulenzbleche oder durch aufzulötende Deckbleche vervollständigt werden.

Eine schematische Schnittansicht durch die Durchtrittsbereiche zweiter Art der Wärmepumpe ist in Fig. 24 gezeigt. Das zweite Fluid durchströmt ausgehend von einer Kammer eines des axial geraden Verteilereinsatzes 507a eine oder mehrere hiermit deckende spiralig angeordnete Durchbrechungen 512 der inneren Wandung 507c und die mit diesen Durchbrechungen Öffnungen 512 verbundenen Ringkammern 507g. Nachfolgend strömt das Fluid durch die Öffnungen 507h der Außenwand 507e und durch die Durchtrittsbereiche 504 erster Art (oder auch zweiter Art). Nach Durchströmen der Durchtrittsbereiche 504 und entsprechendem Wärmeaustausch tritt das Fluid wieder in die gegenüberliegende, symmetrisch aufgebaute Verteilvorrichtung 508 ein. Ersichtlich ist die Funktion der Verteilung des Fluids auf eine Mehrzahl von Strömungswege, die zudem mit einer Drehung der Verteilereinsätze 507a wandern, völlig analog zu der Funktion eines Verteilereinsatzes mit spiralig gebogenen Trennwänden.

## Patentansprüche

1. Wärmepumpe, umfassend
eine Anzahl von Hohlelementen (2) mit einer ersten Zone (2a), einer zweiten Zone (2b) und einem zwischen der ersten und zweiten Zone reversibel verlagerbaren Arbeitsmittel, wobei ein Gleichgewicht eines Zusammenwirkens des Arbeitsmittels mit einer jeden der Zonen (2a, 2b) von thermodynamischen Zustandsgrößen abhängt,
eine Anzahl von Plattenelementen (1), welche stapelartig angeordnet sind und jeweils mindestens ein Hohlelement (2) mit erster und zweiter Zone umfassen, eine Anzahl von zwischen den Plattenelementen (1) angeordneten Durchtrittsbereichen erster Art (4) zur Durchströmung mit einem ersten Fluid zum Wärmeaustausch mit den ersten Zonen (2a),
eine Anzahl von zwischen den Plattenelementen (1) angeordneten Durchtrittsbereichen zweiter Art (5) zur Durchströmung mit einem zweiten Fluid zum Wärmeaustausch mit den zweiten Zonen (2b), wobei das erste Fluid und das zweite Fluid voneinander getrennt sind, und
zumindest zwei jeweils endseitig der Plattenelemente (1) angeordnete und zumindest einer Verteilung des ersten Fluids durch die Durchtrittsbereiche erster Art (4) zugeordnete Verteilvorrichtungen (7, 8) mit jeweils einem feststehenden Hohlzylinder und einem in dem Hohlzylinder drehbaren Verteilereinsatz (7a, 8a), wobei der Verteilereinsatz (7a, 8a) Trennwände (7b, 8b) aufweist, die in jedem der Zylinder zumindest vier, bevorzugt zumindest sechs und besonders bevorzugt zumindest acht separate Kammern (11) abtrennen, wobei durch jede der Kammern (11) ein zumindest einen Durchtrittsbereich (4) umfassender Strömungsweg definiert ist, **dadurch gekennzeichnet, dass** zwischen zwei der Plattenelemente (1) eine Hohlplatte (4, 5) angeordnet ist, deren Hohlraum einem der Durchtrittsbereiche zugeordnet ist, wobei die Hohlplatte (4, 5) in flächiger thermischer Verbindung, insbesondere einem aus der Gruppe Verlötung, Verklebung oder Verspannung, mit den benachbarten Plattenelementen (1) steht und zwischen zwei Plattenelementen (1) eine Hohlplatte erster Art (4) angeordnet ist, welche einen Durchtrittsbereich erster Art ausbildet, und eine von der Hohlplatte erster Art im Wesentlichen thermisch getrennte Hohlplatte zweiter Art (5), welche einen Durchtrittsbereich zweiter Art ausbildet.

2. Wärmepumpe nach Anspruch 1, **dadurch gekennzeichnet, dass** die Wärmepumpe eine Adsorptions-Wärmepumpe ist, wobei das Arbeitsmittel in der ersten Zone (2a) adsorbierbar und desorbierbar ist und in der zweiten Zone (2b) verdampfbar und kondensierbar ist.

3. Wärmepumpe nach Anspruch 1, **dadurch gekennzeichnet, dass** das Arbeitsmittel zumindest in der ersten Zone (2a) reversibel chemisorbierbar ist.

4. Wärmepumpe nach einem der vorhergehenden Ansprüche, **dadurch gekennzeichnet, dass** die Strömungswege eine erste Gruppe von zumindest zwei benachbarten Strömungswegen und eine zweite Gruppe von zumindest zwei benachbarten Strömungswegen aufweisen, wobei die Strömungswege der ersten Gruppe sämtlich in einer ersten Richtung und die Strömungswege der zweiten Gruppe sämtlich in hierzu entgegengesetzter Richtung durchströmt werden.

5. Wärmepumpe nach einem der vorhergehenden Ansprüche, **dadurch gekennzeichnet, dass** das Plattenelement (1) eine Anzahl von parallelen Flachrohren (2) umfasst, wobei jedes der Flachrohre (2) ein Hohlelement mit erster und zweiter Zone ausbildet.

6. Wärmepumpe nach einem der vorhergehenden Ansprüche, **dadurch gekennzeichnet, dass** die Hohlplatten erster und zweiter Art (4, 5) eine unterschiedliche Dicke aufweisen, wobei insbesondere die eine Art von Hohlplatte (4, 5) für ein flüssiges Fluid und die andere Art von Hohlplatte (4, 5) für ein gasförmiges Fluid dimensioniert ist.

7. Wärmepumpe nach einem der vorhergehenden Ansprüche, **dadurch gekennzeichnet, dass** die Trennwände (507b) des Verteilereinsatzes (507a) im Wesentlichen gerade über die Länge des Verteilereinsatzes (507a) verlaufen.

8. Wärmepumpe nach Anspruch 7, **dadurch gekennzeichnet, dass** der Hohlzylinder (507c) eine Mehrzahl von Durchbrechungen (512) aufweist, wobei in axialer Richtung aufeinander folgende Durchbrechungen (512) jeweils um einen Winkel versetzt zueinander angeordnet sind.

9. Wärmepumpe nach Anspruch 7 oder 8, **dadurch gekennzeichnet, dass** der den Verteilereinsatz (507a) umfangende Hohlzylinder eine innere Wandung (507c) und eine äußere Wandung (507e) aufweist, wobei zwischen den beiden Wandungen (507c, 507e) mehrere axial nacheinander angeordnete Ringkammern (507g) ausgebildet sind.

10. Wärmepumpe nach Anspruch 9, **dadurch gekennzeichnet, dass** die Ringkammern (507g) als in axialer Richtung stapelbare Ringkammermodule (530) ausgebildet sind.

11. Wärmepumpe nach einem der vorhergehenden Ansprüche, **dadurch gekennzeichnet, dass** eine Verteileinrichtung (309, 310) für das zweite Fluid vorgesehen ist, wobei das zweite Fluid mittels der Verteilvorrichtung (309, 310) über mehrere Strömungswege (A, B, C, D) durch die Durchtrittsbereiche zweiter Art geleitet wird.

12. Wärmepumpe, umfassend
eine Anzahl von Hohlelementen (2) mit einer ersten Zone (2a), einer zweiten Zone (2b) und einem zwischen der ersten und zweiten Zone reversibel verlagerbaren Arbeitsmittel, wobei ein Gleichgewicht eines Zusammenwirkens des Arbeitsmittels mit einer jeden der Zonen (2a, 2b) von thermodynamischen Zustandsgrößen abhängt,
eine Anzahl von Plattenelementen (1), welche stapelartig angeordnet sind und jeweils mindestens ein Hohlelement (2) mit erster und zweiter Zone umfassen, eine Anzahl von zwischen den Plattenelementen (1) angeordneten Durchtrittsbereichen erster Art (4) zur Durchströmung mit einem ersten Fluid zum Wärmeaustausch mit den ersten Zonen (2a),
eine Anzahl von zwischen den Plattenelementen (1) angeordneten Durchtrittsbereichen zweiter Art (5) zur Durchströmung mit einem zweiten Fluid zum Wärmeaustausch mit den zweiten Zonen (2b), wobei das erste Fluid und das zweite Fluid voneinander getrennt sind, und
zumindest zwei jeweils endseitig der Plattenelemente (1) angeordnete und zumindest einer Verteilung des ersten Fluids durch die Durchtrittsbereiche erster Art (4) zugeordnete Verteilvorrichtungen (7, 8) mit jeweils einem feststehenden Hohlzylinder und einem in dem Hohlzylinder drehbaren Verteilereinsatz (7a, 8a),
**dadurch gekennzeichnet,**
**dass** der Verteilereinsatz (7a, 8a) spiralig ausgeformte Trennwände (7b, 8b) aufweist, die in jedem der Zylinder zumindest vier, bevorzugt zumindest sechs und besonders bevorzugt zumindest acht separate wendelförmige Kammern (11) abtrennen, wobei durch jede der Kammern (11) ein zumindest einen Durchtrittsbereich (4) umfassender Strömungsweg definiert ist und ferner umfassend die zusätzlichen Merkmale eines oder mehrerer der Ansprüche 2 bis 11.

## Claims

1. A heat pump, comprising
a number of hollow elements (2) with a first zone (2a), a second zone (2b) and a working medium which can be displaced in a reversible manner between the first and second zones, wherein an equilibrium of an interaction of the working medium with each of the zones (2a, 2b) depending on thermodynamic state variables,
a number of plate elements (1) which are arranged in the form of a stack and each comprise at least one hollow element (2) with first and second zones,
a number of passage regions of a first type (4) arranged between the plate elements (1) to be flowed through by a first fluid for exchanging heat with the first zones (2a),
a number of passage regions of a second type (5) arranged between the plate elements (1) to be flowed through by a second fluid for exchanging heat with the second zones (2b), wherein the first fluid and the second fluid being separated from each other, and at least two distributing devices (7, 8) which are arranged at the end of the plate elements (1) in each case and associated with at least a distribution of the first fluid through the passage regions of the first type (4) and each have a stationary hollow cylinder and a distributor insert (7a, 8a) which is rotatable within the hollow cylinder, wherein the distributor insert (7a, 8a) has partitions (7b, 8b) which separate off in each of the cylinders at least four, preferably at least six and particularly preferably at least eight, separate chambers (11), wherein a flow path comprising at least one passage region (4) being defined by each of the chambers (11), **characterised in that** a hollow plate (4, 5), the cavity of which is associated with one of the passage regions, is arranged between two of the plate elements (1), the hollow plate (4, 5) being thermally connected, in particular by one of soldering, bonding or bracing, in a planar manner to the adjacent plate elements (1), and a hollow plate of a first type (4), forming a passage region of a first type, and a hollow plate of a second type (5) which is substantially thermally isolated from the hollow plate of the first type and forms a passage region of a second type are arranged between two plate elements (1).

2. The heat pump as claimed in claim 1, **characterised in that** the heat pump is an adsorption heat pump, wherein the working medium being adsorbable and desorbable in the first zone (2a) and vapourable and condensable in the second zone (2b).

3. The heat pump as claimed in claim 1, **characterised in that** the working medium is reversibly chemisorbable at least in the first zone (2a).

4. The heat pump as claimed in one of the preceding claims, **characterised in that** the flow paths include a first group of at least two adjacent flow paths and a second group of at least two adjacent flow paths, wherein the flow paths of the first group all being flowed through in a first direction and the flow paths of the second group all being flowed through in a direction opposite thereto.

5. The heat pump as claimed in one of the preceding claims, **characterised in that** the plate element (1) comprises a number of parallel flat tubes (2), each of the flat tubes (2) forming a hollow element with first and second zones.

6. The heat pump as claimed in one of the preceding claims, **characterised in that** the hollow plates of the first and second type (4, 5) are of differing thickness, wherein, in particular, one type of hollow plate (4, 5) is designed for a liquid fluid and the other type of hollow plate (4, 5) for a gaseous fluid.

7. The heat pump as claimed in one of the preceding claims, **characterised in that** the partitions (507b) of the distributor insert (507a) run substantially straight over the length of the distributor insert (507a).

8. The heat pump as claimed in claim 7, **characterised in that** the hollow cylinder (507c) has a plurality of apertures (512), apertures (512) which succeed one another in the axial direction each being arranged offset from one another by an angle.

9. The heat pump as claimed in claim 7 or 8, **characterised in that** the hollow cylinder surrounding the distributor insert (507a) has an inner wall (507c) and an outer wall (507e), wherein a plurality of annular chambers (507g) arranged in axial succession being formed between the two walls (507c, 507e).

10. The heat pump as claimed in claim 9, **characterised in that** the annular chambers (507g) are formed as annular chamber modules (530) which can be stacked in the axial direction.

11. The heat pump as claimed in one of the preceding claims, **characterised in that** a distributor means (309, 310) is provided for the second fluid, wherein the second fluid being guided by means of the distributing device (309, 310) via a plurality of flow paths (A, B, C, D) through the passage regions of the second type.

12. A heat pump, comprising
a number of hollow elements (2) with a first zone (2a), a second zone (2b) and a working medium which can be displaced in a reversible manner between the first and second zones, wherein an equilibrium of an interaction of the working medium with each of the zones (2a, 2b) depending on thermodynamic state variables,
a number of plate elements (1) which are arranged in the form of a stack and each comprise at least one hollow element (2) with a first and second zones, a number of passage regions of a first type (4) arranged between the plate elements (1) to be flowed through by a first fluid for exchanging heat with the first zone (2a),
a number of passage regions of a second type (5) arranged between the plate elements (1) to be flowed through by a second fluid for exchanging heat with the second zones (2b), wherein the first fluid and the second fluid being separated from each other, and at least two distributing devices (7, 8) which are arranged at the end of the plate elements (1) in each case and associated with at least a distribution of the first fluid through the passage regions of the first type (4) and each have a stationary hollow cylinder and a distributor insert (7a, 8a) which is rotatable within the hollow cylinder,
**characterised in that**
the distributor insert (7a, 8a) has spirally formed partitions (7b, 8b) which separate off in each of the cylinders at least four, preferably at least six and particularly preferably at least eight, separate helical chambers (11), wherein a flow path comprising at least one passage region (4) being defined by each of the chambers (11), and further comprising additional features as claimed in one or more of claims 2 to 11.

## Revendications

1. Pompe à chaleur comprenant
un certain nombre d'éléments creux (2) comportant une première zone (2a), une seconde zone (2b) et un moyen de travail pouvant être déplacé de manière réversible entre la première et la seconde zone, où un équilibre d'une action conjointe du moyen de travail, avec chacune des zones (2a, 2b), dépend de grandeurs d'état thermodynamiques,
un certain nombre d'éléments en plaques (1) qui sont disposés de façon empilée et comprennent à chaque fois au moins un élément creux (2) comportant une première et une seconde zone,
un certain nombre de zones de passage d'un premier type (4) disposées entre les éléments en plaques (1) et prévues pour la circulation d'un premier fluide servant à l'échange de chaleur avec les premières zones (2a),
un certain nombre de zones de passage d'un second type (5) disposées entre les éléments en plaques (1) et prévues pour la circulation d'un second fluide servant à l'échange de chaleur avec les secondes zones (2b), où le premier fluide et le second fluide sont séparés l'un de l'autre, et
au moins deux dispositifs de distribution (7, 8) disposés à chaque fois côté extrémité des éléments en plaques (1) et associés au moins à une distribution du premier fluide circulant à travers les zones de passage du premier type (4), lesdits dispositifs de distribution comprenant à chaque fois un cylindre creux fixe et un élément distributeur (7a, 8a) pouvant tourner dans le cylindre creux, où l'élément distributeur (7a, 8a) présente des parois de séparation (7b, 8b) qui séparent, dans chacun des cylindres, au moins quatre, de préférence au moins six et, de façon particulièrement préférable, au moins huit chambres séparées (11), où un trajet d'écoulement englobant au moins une zone de passage (4) est défini à travers chacune des chambres (11), **caractérisée en ce qu'**une plaque creuse (4, 5) est disposée entre deux des éléments en plaques (1), plaque creuse dont l'espace creux est associé à l'une des zones de passage, où la plaque creuse (4, 5) est en liaison thermique, à plat, avec les éléments en plaques adjacents (1), en particulier grâce à l'un des moyens d'assemblage parmi le groupe de ceux permettant le brasage, le collage ou le serrage, et une plaque creuse d'un premier type (4) est disposée entre deux éléments en plaques (1), plaque creuse qui constitue une zone de passage d'un premier type, une plaque creuse d'un second type (5), qui forme une zone de passage d'un second type, étant pratiquement séparée thermiquement de la plaque creuse d'un premier type.

2. Pompe à chaleur selon la revendication 1, **caractérisée en ce que** la pompe à chaleur est une pompe à chaleur à adsorption, où le moyen de travail est adsorbable et désorbable dans la première zone (2a), et est évaporable et condensable dans la seconde zone (2b).

3. Pompe à chaleur selon la revendication 1, **caractérisée en ce que** le moyen de travail est résorbable chimiquement, de manière réversible, au moins dans la première zone (2a).

4. Pompe à chaleur selon l'une quelconque des revendications précédentes, **caractérisée en ce que** les trajets d'écoulement présentent un premier groupe d'au moins deux trajets d'écoulement adjacents, et un second groupe d'au moins deux trajets d'écoulement adjacents, où les trajets d'écoulement du premier groupe sont tous traversés dans une première direction, et les trajets d'écoulement du second groupe sont tous traversés dans une direction opposée à cette première direction.

5. Pompe à chaleur selon l'une quelconque des revendications précédentes, **caractérisée en ce que** l'élément en plaque (1) présente un certain nombre de tubes plats parallèles (2), où chacun des tubes plats (2) forme un élément creux comprenant une première et une seconde zone.

6. Pompe à chaleur selon l'une quelconque des revendications précédentes, **caractérisée en ce que** les plaques creuses du premier et du second type (4, 5) présentent une épaisseur différente où, en particulier, l'un des types de plaque creuse (4, 5) est dimensionné pour un fluide liquide, l'autre type de plaque creuse (4, 5) étant dimensionné pour un fluide gazeux.

7. Pompe à chaleur selon l'une quelconque des revendications précédentes, **caractérisée en ce que** les parois de séparation (507b) de l'élément distributeur (507a) s'étendent pratiquement de façon rectiligne sur la longueur de l'élément distributeur (507a).

8. Pompe à chaleur selon la revendication 7, **caractérisée en ce que** le cylindre creux (507c) présente une pluralité d'ouvertures (512), où des ouvertures (512), qui se suivent dans la direction axiale, sont disposées les unes par rapport aux autres, à chaque fois en étant décalées suivant un angle.

9. Pompe à chaleur selon la revendication 7 ou 8, **caractérisée en ce que** le cylindre creux entourant l'élément distributeur (507a) présente une paroi intérieure (507c) et une paroi extérieure (507e), où plusieurs chambres annulaires (507g), disposées les unes derrière les autres axialement, sont configurées entre les deux parois (507c, 507e).

10. Pompe à chaleur selon la revendication 9, **caractérisée en ce que** les chambres annulaires (507g) sont configurées comme des modules de chambres annulaires (530) empilables dans la direction axiale.

11. Pompe à chaleur selon l'une quelconque des revendications précédentes, **caractérisée en ce qu'**un dispositif de distribution (309, 310) est prévu pour le second fluide, où le second fluide est dirigé, au moyen du dispositif de distribution (309, 310), pour circuler à travers les zones de passage du second type, via plusieurs trajets d'écoulement (A, B, C, D).

12. Pompe à chaleur comprenant
un certain nombre d'éléments creux (2) comportant une première zone (2a), une seconde zone (2b) et un moyen de travail pouvant être déplacé de manière réversible entre la première et la seconde zone, où un équilibre d'une action conjointe du moyen de travail, avec chacune des zones (2a, 2b), dépend de grandeurs d'état thermodynamiques,
un certain nombre d'éléments en plaques (1) qui sont disposés de façon empilée et comprennent à chaque fois au moins un élément creux (2) comportant une première et une seconde zone,
un certain nombre de zones de passage d'un premier type (4) disposées entre les éléments en plaques (1) et prévues pour la circulation d'un premier fluide servant à l'échange de chaleur avec les premières zones (2a),
un certain nombre de zones de passage d'un second type (5) disposées entre les éléments en plaques (1) et prévues pour la circulation d'un second fluide servant à l'échange de chaleur avec les secondes zones (2b), où le premier fluide et le second fluide sont séparés l'un de l'autre, et
au moins deux dispositifs de distribution (7, 8) disposés à chaque fois côté extrémité des éléments en plaques (1) et associés au moins à une distribution du premier fluide circulant à travers les zones de passage du premier type (4), lesdits dispositifs de distribution comprenant à chaque fois un cylindre creux fixe et un élément distributeur (7a, 8a) pouvant tourner dans le cylindre creux,
**caractérisée en ce que** l'élément distributeur (7a, 8a) présente des parois de séparation (7b, 8b) en forme de spirale, parois de séparation qui séparent, dans chacun des cylindres, au moins quatre, de préférence au moins six et, de façon particulièrement préférable, au moins huit chambres séparées (11), de forme hélicoïdale, où un trajet d'écoulement englobant au moins une zone de passage (4) est défini à travers chacune des chambres (11), ladite pompe à chaleur comprenant en outre les caractéristiques supplémentaires de l'une quelconque ou plusieurs des revendications 2 à 11.
